(19) **Europäisches Patentamt / European Patent Office / Office européen des brevets**

(11) **EP 4 753 166 A1**

(12) **EUROPEAN PATENT APPLICATION**
published in accordance with Art. 153(4) EPC

(43) Date of publication:
03.06.2026 Bulletin 2026/23

(21) Application number: 24845917.4

(22) Date of filing: 18.07.2024

(51) International Patent Classification (IPC):
H04B 7/155 (2006.01)    H04B 7/06 (2006.01)
H04B 7/0408 (2017.01)    H04W 72/044 (2023.01)
H04W 72/0446 (2023.01)    H04W 72/231 (2023.01)
H04W 72/232 (2023.01)    H04W 72/56 (2023.01)
H04W 84/04 (2009.01)

(52) Cooperative Patent Classification (CPC):
H04W 72/563; H04B 7/0408; H04B 7/06;
H04B 7/155; H04W 84/04; H04W 72/23;
H04W 84/047

(86) International application number:
PCT/KR2024/010334

(87) International publication number:
WO 2025/023615 (30.01.2025 Gazette 2025/05)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 25.07.2023 KR 20230096875
17.07.2024 KR 20240094280

(71) Applicant: Electronics and Telecommunications
Research Institute
Daejeon 34129 (KR)

(72) Inventors:
• NOH, Hoon Dong
Daejeon 34129 (KR)
• JU, Hyung Sik
Daejeon 34129 (KR)

(74) Representative: Betten & Resch
Patent- und Rechtsanwälte PartGmbB
Maximiliansplatz 14
80333 München (DE)

(54) **METHOD AND APPARATUS BY WHICH WIRELESS REPEATER MANAGES BEAMS**

(57) Disclosed are a method and apparatus by which a wireless repeater manages beams. The method of the repeater includes the steps of: receiving first resource set information associated with a first beam from a first base station; receiving second resource set information associated with a second beam from a second base station; selecting one piece of resource set information having a higher priority from between the first resource set information and the second resource set information if a first time resource indicated by the first resource set information overlaps with a second time resource indicated by the second resource set information; and communicating with a terminal by using one beam associated with the one piece of resource set information from among resources indicated by the one piece of resource set information.

FIG. 25

## Description

[Technical Field]

The present disclosure relates to a beam management technique, and more particularly, to a beam management technique for a wireless repeater for communication coverage extension.

[Background Art]

With the advancement of information and communication technology, various wireless communication technologies are being developed. Representative wireless communication technologies may be long term evolution (LTE), LTE-advanced (LTE-A), new radio (NR), and the like specified as the 3rd generation partnership project (3GPP) standards. The LTE and/or LTE-A may be 4th generation (4G) communication technologies and the NR may be a 5th generation (5G) communication technology.

After commercialization of the 4G communication system (e.g., communication system supporting LTE and/or LTE-A), a 5G communication system (e.g., communication system supporting new radio (NR)) using a higher frequency band (e.g., a frequency band of 6GHz or above) than a frequency band (e.g., a frequency band of 6GHz or below) of the 4G communication system is being considered for processing of soaring wireless data. The 5G communication system can support enhanced Mobile BroadBand (eMBB), Ultra Reliable Low Latency Communication (URLLC), and/or Massive Machine Type Communication (mMTC).

In the 5G communication system and/or a beyond 5G communication system (e.g., 6G communication system or future communication system), a network-controlled repeater (NCR) may be introduced. The NCR can efficiently extend the coverage of communication systems. The NCR may be introduced to overcome the limitations of existing radio frequency (RF) repeaters, which perform simple amplification and/or retransmission operations of received signals. A base station can control the NCR. The NCR can perform additional signal processing functions as well as amplification and/or retransmission of received signals. In a communication system supporting NCR, the base station (or network) can control the NCR's operations based on control signals.

The signal processing functions of the NCR can support operations such as receiving control signals from the base station and/or transmitting responses to these control signals to the base station. Devices to support these signal processing functions can be added. If the NCR performs relay operations in a millimeter wave (mmWave) frequency band above 6GHz, additional devices may be needed to support the generation, control, and/or management of beams to secure coverage in the mmWave band.

In the existing NR standard, only one beam can be allocated for an access link of the NCR within the same time resource (e.g., at a specific time). In other words, the existing NR standard may only support single beam operations. The access link refers to the link between the NCR and a terminal. If multiple beams are allocated within the same time resource (e.g., at a specific time), methods for selecting one of the multiple beams may be needed to ensure single beam operations.

In the future communication system (e.g., 5G-advanced communication system, 6G communication system, etc.), the antenna structure and/or antenna panel structure of the repeater (e.g., NCR) may become more advanced, and the number of users in the mmWave band may increase. Considering this situation, the operations of the repeater using multiple beams within the same time resource may be required. In other words, the need for multi-beam operations may be high. To support multi-beam operations, methods for multi-beam indication and multi-beam priority determination may be required. Multi-beam operations can be performed on the access link.

[Disclosure]

[Technical Problem]

The present disclosure for resolving the above-described problems is directed to providing a method and an apparatus for beam management in a wireless repeater.

[Technical Solution]

A method of a wireless repeater, according to exemplary embodiments of the present disclosure for achieving the above-described objective, may comprise: receiving, from a first base station, first resource set information associated with a first beam; receiving, from a second base station, second resource set information associated with a second beam; in response to that a first time resource indicated by the first resource set information overlaps with a second time resource indicated by the second resource set information, selecting one resource set information having a higher priority among the first resource set information and the second resource set information; and performing communication with a terminal using one beam associated with the one resource set information in a resource indicated by the one resource set information.

Each of the first resource set information and the second resource set information may indicate a semi-persistent resource, periodic resource, or aperiodic resource.

Each of the first resource set information and the second resource set information, which indicates the semi-persistent resource or the periodic resource, may be included in a radio resource control (RRC) message, and each of the first resource set information and the second resource set information, which indicates the aperiodic resource, may be included in downlink control information (DCI).

The first resource set information may include a single beam indication or a multi-beam indication including the first beam, and the second resource set information may include a single beam indication or a multi-beam indication including the second beam.

Use of a resource indicated by each of the first resource set information and the second resource set information may be indicated by a medium access control (MAC) control element (CE).

The one resource set information indicating an aperiodic resource among the first resource set information and the second resource set information may have the higher priority.

The one resource set information indicating a semi-persistent resource among the first resource set information and the second resource set information may have the higher priority.

The one resource set information with a priority flag among the first resource set information and the second resource set information may be the higher priority.

The one resource set information associated with a low beam index or a high beam index among the first resource set information and the second resource set information may have the higher priority.

The one resource set information including a single beam indication or a multi-beam indication among the first resource set information and the second resource set information may have the higher priority.

A resource indicated by each of the first resource set information and the second resource set information may be a resource on an access link between the repeater and the terminal.

The first base station and the second base station may be a same base station or different base stations.

A repeater, according to exemplary embodiments of the present disclosure for achieving the above-described objective, may comprise: at least one processor, and the at least one processor may cause the repeater to perform: receiving, from a first base station, first resource set information associated with a first beam; receiving, from a second base station, second resource set information associated with a second beam; in response to that a first time resource indicated by the first resource set information overlaps with a second time resource indicated by the second resource set information, selecting one resource set information having a higher priority among the first resource set information and the second resource set information; and performing communication with a terminal using one beam associated with the one resource set information in a resource indicated by the one resource set information.

Each of the first resource set information and the second resource set information may indicate a semi-persistent resource, periodic resource, or aperiodic resource.

The first resource set information may include a single beam indication or a multi-beam indication including the first beam, and the second resource set information may include a single beam indication or a multi-beam indication including the second beam.

The one resource set information indicating an aperiodic resource among the first resource set information and the second resource set information may have the higher priority.

The one resource set information indicating a semi-persistent resource among the first resource set information and the second resource set information may have the higher priority.

The one resource set information with a priority flag among the first resource set information and the second resource set information may be the higher priority.

The one resource set information associated with a low beam index or a high beam index among the first resource set information and the second resource set information may have the higher priority.

The one resource set information including a single beam indication or a multi-beam indication among the first resource set information and the second resource set information may have the higher priority.

[Advantageous Effects]

According to the present disclosure, a performance gain of the communication system can be enhanced through a repeater (e.g., network-controlled repeater (NCR)). The repeater can efficiently perform amplification and/or retransmission operations for signals of the repeater and/or a terminal. Multiple beams can be indicated on an access link between the repeater and the terminal. In this case, the repeater can select one or more beams from the multiple beams based on priorities, and communicate with the terminal using the selected one or more beams. Accordingly, the ambiguity of beam selection can be resolved, and communication between the repeater and the terminal can be efficiently performed.

[Description of Drawings]

FIG. 1 is a conceptual diagram illustrating exemplary embodiments of a radio interface protocol structure in a communication system.

FIG. 2 is a conceptual diagram illustrating exemplary embodiments of time resources in which radio signals are transmitted in a communication system.

FIG. 3 is a conceptual diagram illustrating a time difference between a reception timing of an i-th downlink frame and a transmission timing of an i-th uplink frame in an exemplary embodiment of a communication system.

FIG. 4 is a conceptual diagram illustrating exemplary embodiments of a time/frequency resource grid of a communication system.

FIG. 5 is a conceptual diagram illustrating exemplary embodiments of a synchronization signal and physical broadcast channel (SS/PBCH) block or synchronization signal block (SSB) of a communication system.

FIG. 6 is a sequence chart illustrating exemplary embodiments of a random access procedure in a communication system.

FIG. 7 is a conceptual diagram illustrating exemplary embodiments of SSB-RO association according to RACH configuration in a communication system.

FIG. 8 is a conceptual diagram illustrating exemplary embodiments of SSB-RO association according to RACH configuration in a communication system.

FIG. 9 is a conceptual diagram illustrating exemplary embodiments of a QCL information transfer process through TCI state configuration and indication in a communication system.

FIG. 10 is a conceptual diagram illustrating exemplary embodiments of a TCI state activation/deactivation MAC CE in a communication system.

FIG. 11 is a conceptual diagram illustrating exemplary embodiments of a TCI state indication MAC CE in a communication system.

FIG. 12 is a conceptual diagram illustrating slot configurations according to slot formats in a communication system.

FIG. 13 is a sequence chart illustrating exemplary embodiments of a UE capability reporting procedure in a communication system.

FIGS. 14A and 14 B are conceptual diagrams for describing exemplary embodiments of a user plane protocol stack structure and a control plane protocol stack structure in a communication system.

FIG. 15 is a conceptual diagram illustrating exemplary embodiments of a slot format configuration method.

FIG. 16 is a conceptual diagram illustrating exemplary embodiments of a commercial RF repeater.

FIG. 17 is a conceptual diagram illustrating exemplary embodiments of protocol stacks of a control plane and a user plane in a communication system having an RF repeater.

FIG. 18 is a conceptual diagram illustrating exemplary embodiments of NCR.

FIG. 19A is a conceptual diagram illustrating exemplary embodiments of a protocol stack of a user plane of an advanced repeater.

FIG. 19B is a conceptual diagram illustrating exemplary embodiments of a protocol stack of a control plane of an advanced repeater.

FIG. 20 is a conceptual diagram illustrating exemplary embodiments of NCR amplifier structures and RF chain configurations according to the amplifier structures.

FIG. 21 is a conceptual diagram illustrating exemplary embodiments of NCR amplifier structures and RF chain configurations according to the amplifier structures.

FIG. 22 is a conceptual diagram illustrating exemplary embodiments of a prioritization method for a single beam. In FIG. 22, 'flag' may mean the priority flag.

FIG. 23 is a conceptual diagram illustrating exemplary embodiments of a prioritization method for multiple beams. In FIG. 23, 'flag' may mean the priority flag.

FIG. 24 is a flowchart illustrating a method of performing single beam operations or multi-beam operations based on priorities.

FIG. 25 is a sequence chart illustrating a method of performing single beam operations or multi-beam operations based on priorities.

FIG. 26 is a block diagram illustrating exemplary embodiments of a base station.

FIG. 27 is a block diagram illustrating exemplary embodiments of a repeater.

FIG. 28 is a block diagram illustrating exemplary embodiments of a communication node.

[Mode for Invention]

While the present disclosure is capable of various modifications and alternative forms, specific embodiments thereof are shown by way of example in the drawings and will herein be described in detail. It should be understood, however, that there is no intent to limit the present disclosure to the particular forms disclosed, but on the contrary, the present disclosure is to cover all modifications, equivalents, and alternatives falling within the spirit and scope of the present disclosure. Like numbers refer to like elements throughout the description of the figures.

It will be understood that, although the terms first, second, etc. may be used herein to describe various elements, these elements should not be limited by these terms. These terms are only used to distinguish one element from another. For example, a first element could be termed a second element, and, similarly, a second element could be termed a first element, without departing from the scope of the present disclosure. As used herein, the term "and/or" includes any and all combinations of one or more of the associated listed items.

In exemplary embodiments of the present disclosure, "at least one of A and B" may refer to "at least one A or B" or "at least one of one or more combinations of A and B". In addition, "one or more of A and B" may refer to "one or more of A or B" or "one or more of one or more combinations of A and B".

In the present disclosure, "(re)transmission" may refer to "transmission", "retransmission", or "transmission and retransmission", "(re)configuration" may refer to "configuration", "reconfiguration", or "configuration and reconfiguration", "(re)connection" may refer to "connection", "reconnection", or "connection and reconnection", and "(re)access" may mean "access", "re-access", or "access and re-access".

It will be understood that when an element is referred to as being "connected" or "coupled" to another element, it can be directly connected or coupled to the other element or intervening elements may be present. In contrast, when an element is referred to as being "directly connected" or "directly coupled" to another element, there are no intervening elements present. Other words used to describe the relationship between elements should be interpreted in a like fashion (i.e. "between" versus "directly between," "adjacent" versus "directly adjacent," etc.).

The terminology used herein is for the purpose of describing particular embodiments only and is not intended to be limiting of the present disclosure. As used herein, the singular forms "a," "an" and "the" are intended to include the plural forms as well, unless the context clearly indicates otherwise. It will be further understood that the terms "comprises," "comprising," "includes" and/or "including," when used herein, specify the presence of stated features, integers, steps, operations, elements, and/or components, but do not preclude the presence or addition of one or more other features, integers, steps, operations, elements, components, and/or groups thereof.

Unless otherwise defined, all terms (including technical and scientific terms) used herein have the same meaning as commonly understood by one of ordinary skill in the art to which this present disclosure belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

Hereinafter, preferred exemplary embodiments of the present disclosure will be described in more detail with reference to the accompanying drawings. In describing the present disclosure, in order to facilitate an overall understanding, the same reference numerals are used for the same elements in the drawings, and duplicate descriptions for the same elements are omitted.

A communication network to which exemplary embodiments according to the present disclosure are applied will be described. The communication network to which the exemplary embodiments according to the present disclosure are applied is not limited to the contents described below, and the exemplary embodiments according to the present disclosure may be applied to various communication networks. Here, the communication network may have the same meaning as a communication system. A communication network may refer to a wireless communication network, and a communication system may refer to a wireless communication system.

In the present disclosure, "configuration of an operation (e.g., transmission operation)" may refer to signaling of "control information (e.g., information element, parameter) for the operation" and/or "information indicating to perform the operation". "An information element (e.g., parameter) is configured" may mean that the corresponding information element is signaled. In the present disclosure, signaling may be at least one of system information (SI) signaling (e.g., transmission of a system information block (SIB) and/or master information block (MIB)), RRC signaling (e.g., transmission of RRC parameters and/or higher layer parameters), MAC control element (CE) signaling, or PHY signaling (e.g., transmission of downlink control information (DCI), uplink control information (UCI), and/or sidelink control information (SCI)).

Throughout the present disclosure, a network may include, for example, a wireless Internet such as wireless fidelity (WiFi), mobile Internet such as a wireless broadband Internet (WiBro) or a world interoperability for microwave access (WiMax), 2G mobile communication network such as a global system for mobile communication (GSM) or a code division multiple access (CDMA), 3G mobile communication network such as a wideband code division multiple access (WCDMA) or a CDMA2000, 3.5G mobile communication network such as a high speed downlink packet access (HSDPA) or a high speed uplink packet access (HSUPA), 4G mobile communication network such as a long term evolution (LTE) network or an LTE-Advanced network, 5G mobile communication network, beyond 5G (B5G) mobile communication network (e.g., 6G mobile communication network), or the like.

Throughout the present disclosure, a terminal may refer to a mobile station, mobile terminal, subscriber station, portable subscriber station, user equipment, access terminal, or the like, and may include all or a part of functions of the terminal, mobile station, mobile terminal, subscriber station, mobile subscriber station, user equipment, access terminal, or the like.

Here, a desktop computer, laptop computer, tablet PC, wireless phone, mobile phone, smart phone, smart watch, smart glass, e-book reader, portable multimedia player (PMP), portable game console, navigation device, digital camera, digital multimedia broadcasting (DMB) player, digital audio recorder, digital audio player, digital picture recorder, digital picture player, digital video recorder, digital video player, or the like having communication capability may be used as the terminal.

Throughout the present disclosure, the base station may refer to an access point, radio access station, node B (NB), evolved node B (eNB), base transceiver station, mobile multihop relay (MMR)-BS, or the like, and may include all or part of functions of the base station, access point, radio access station, NB, eNB, base transceiver station, MMR-BS, or the like.

Hereinafter, preferred exemplary embodiments of the present disclosure will be described in more detail with reference to the accompanying drawings. In describing the present disclosure, in order to facilitate an overall understanding, the same reference numerals are used for the same elements in the drawings, and duplicate descriptions for the same elements are omitted.

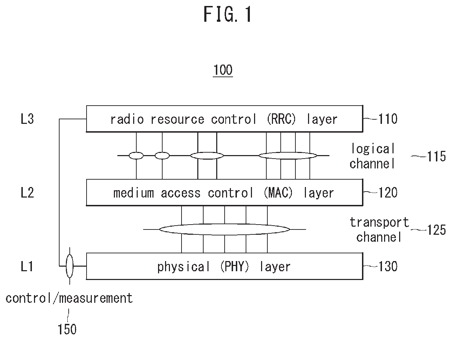

FIG. 1 is a conceptual diagram illustrating exemplary embodiments of a radio interface protocol structure in a communication system.

Referring to FIG. 1, an exemplary embodiment of a radio interface protocol structure 100 of a communication system may be configured to include a radio resource control (RRC) layer 110, a medium access control (MAC) layer 120, a physical (PHY) layer 130, and the like. An exemplary embodiment of the radio interface protocol structure 100 shown in FIG. 1 may correspond to various exemplary embodiments of interfaces such as an interface between a terminal and a base station, an interface between an IAB-node distributed unit (IAB-DU) and an IAB-node mobile terminal (IAB-MT) of an integrated access backhaul (IAB) network, an interface between an IAB-DU and a lower node, an interface between an IAB-MT and an upper node, an interface between a plurality of terminals, and the like.

In the vicinity of the PHY layer 130, the RRC layer 110, and the MAC layer 120, and the like may be disposed above the PHY layer 130. For example, the MAC layer 120 may be disposed above the PHY layer 130. The RRC layer 110 may be disposed above the MAC layer 120.

The MAC layer 120 may be connected to a higher layer (e.g., RRC layer 110) through logical channels 115. The PHY layer 130 may be connected to the higher MAC layer 120 through transport channels 125. The PHY layer 130 may transmit and receive control information or measurement information 150 to and from the RRC layer 110.

The PHY layer 130 may be referred to as a 'layer 1' or 'L1'. The MAC layer 120 may be referred to as a 'layer 2' or 'L2'. The RRC layer 110 may be referred to as a 'layer 3' or 'L3'. The RRC layer 110 and the MAC layer 120 may be collectively referred to as the 'higher layer'.

In the present disclosure, 'L1 signaling' refers to signaling such as downlink control information (DCI) transmitted on a physical downlink control channel (PDCCH), uplink control information (UCI) transmitted on a physical uplink control channel (PUCCH), and sidelink control information (SCI) transmitted on a physical sidelink control channel (PSCCH), which are channels of the PHY layer 130. Similarly, in the present disclosure, 'higher layer signaling' may include L2 signaling transmitted through a MAC control element (CE), L3 signaling transmitted through RRC signaling, and the like.

In a communication system to which the 5G communication technology, etc. is applied, one or more of numerologies of Table 1 may be used in accordance with various purposes, such as inter-carrier interference (ICI) reduction according to frequency band characteristics, latency reduction according to service characteristics, and the like.

[Table 1]

| $\mu$ | $\Delta f = 2^{\mu} \cdot 15$ [kHz] | Cyclic prefix |
|---|---|---|
| 0 | 15 | Normal |
| 1 | 30 | Normal |
| 2 | 60 | Normal, Extended |
| 3 | 120 | Normal |
| 4 | 240 | Normal |

Table 1 is merely an example for the convenience of description, and exemplary embodiments of the numerologies used in the communication system may not be limited thereto. Each numerology $\mu$ may correspond to information of a subcarrier spacing (SCS) $\Delta f$ and a cyclic prefix (CP). The terminal may identify a numerology $\mu$ and a CP value applied to a downlink bandwidth part (BWP) or an uplink BWP based on higher layer parameters such as subcarrierSpacing, cyclicPrefix, and/or the like.

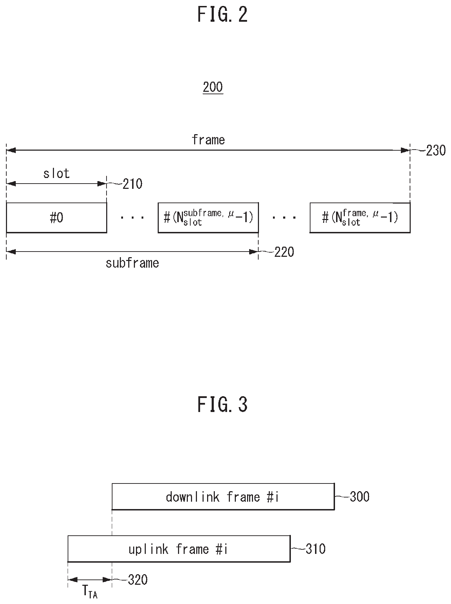

FIG. 2 is a conceptual diagram illustrating exemplary embodiments of time resources in which radio signals are transmitted in a communication system.

Referring to FIG. 2, time resources in which radio signals are transmitted in a communication system 200 may be represented with a frame 220 comprising one or more ( $N_{\text{slot}}^{\text{frame},\mu}/N_{\text{slot}}^{\text{subframe},\mu}$ ) subframes, a subframe 220 comprising one or more ( $N_{\text{slot}}^{\text{subframe},\mu}$ ) slots, and a slot 210 comprising 14 ( $N_{\text{symb}}^{\text{slot}}$ ) OFDM symbols. In this case, according to a configured numerology, as the values of $N_{\text{symb}}^{\text{slot}}$, $N_{\text{slot}}^{\text{subframe},\mu}$, and $N_{\text{slot}}^{\text{frame},\mu}$, values according to Table 2 below may be used in case of a normal CP, and values according to Table 3 below may be used in case of an extended CP. The OFDM symbols included within one slot may be classified into 'downlink', 'flexible', or 'uplink' by higher layer signaling or a combination of higher layer signaling and L1 signaling.

[Table 2]

| $\mu$ | $N_{\text{symb}}^{\text{slot}}$ | $N_{\text{slot}}^{\text{frame},\mu}$ | $N_{\text{slot}}^{\text{subframe},\mu}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

[Table 3]

| $\mu$ | $N_{\text{symb}}^{\text{slot}}$ | $N_{\text{slot}}^{\text{frame},\mu}$ | $N_{\text{slot}}^{\text{subframe},\mu}$ |
|---|---|---|---|
| 2 | 12 | 40 | 4 |

In the 5G NR communication system, the frame 230 may have a length of 10 ms, and the subframe 220 may have a length of 1 ms. Each frame 230 may be divided into two half-frames having the same length, and the first half-frame (i.e. half-frame 0) may be composed of subframes #0 to #4, and the second half-frame (i.e. half-frame 1) may be composed of subframes #5 to #9. One carrier may include a set of frames for uplink (i.e. uplink frames) and a set of frames for downlink (i.e. downlink frames).

FIG. 3 is a conceptual diagram illustrating a time difference between a reception timing of an i-th downlink frame and a transmission timing of an i-th uplink frame in an exemplary embodiment of a communication system.

Referring to FIG. 3, a time difference between a reception timing of an i-th downlink frame 300 and a transmission timing of an i-th uplink frame 310 may be a TTA 320. Accordingly, the terminal may start transmission of the uplink frame #i 310 at a time earlier by TTA compared to the reception timing of the downlink frame #i 300. TTA may be referred to as a timing advance or timing adjustment TA. The base station may instruct the terminal to change a value of TTA through higher layer signaling or L1 signaling, and may configure the terminal to apply TTA in a manner defined as $T_{TA} = (N_{TA} + N_{TA,offset})$ $T_c$. In the case of 5G

NR, $T_c$ may be defined as $T_c = \frac{1}{(\Delta f_{max} \cdot N_f)}$ , $\Delta f_{max}$ may be defined as $\Delta f_{max} = 480\ kHz$, $N_f$ may be defined as $N_f = 4096$, $N_{TA,offset}$ may be a value set by L3 signaling, and $N_{TA}$ may be a value determined by Equation 1 below by a value $T_A$ indicated by L2 signaling.

[Equation 1]

$$N_{TA} = \begin{cases} T_A \cdot 16 \cdot \dfrac{64}{2^\mu} & \text{(for random access response)} \\ N_{TA\_old} + \left((T_A - 31) \cdot 16 \cdot 64/2^\mu\right) & \text{(for other cases)} \end{cases}$$

Here, the description on $N_{TA,offset}$ and $N_{TA}$ may be an example for a specific situation, and various other options may exist, but in order not to obscure the gist of the description, all possible cases may not be listed in the present disclosure.

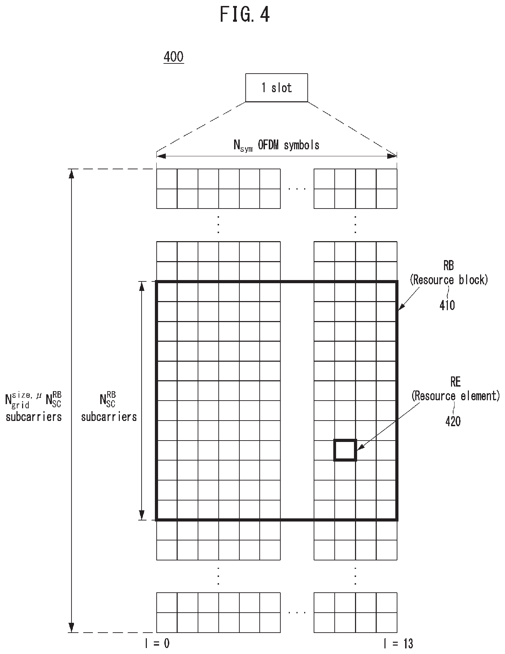

FIG. 4 is a conceptual diagram illustrating exemplary embodiments of a time/frequency resource grid of a communication system.

Referring to FIG. 4, a time/frequency resource grid 400 of a communication system may have $N_{grid}^{size,\mu} N_{sc}^{RB}$ subcarriers and $N_{slot}^{subframe,\mu}$ OFDMs. The resource grid may be defined for each numerology and each carrier. In this case, $N_{grid}^{start,\mu}$ may mean a position of a common resource block (CRB) indicated by higher layer signaling. $N_{grid}^{size,\mu}$ may mean the number of resource blocks (RBs) starting from the CRB, that is, a carrier bandwidth. $N_{grid}^{start,\mu}$ and/or $N_{grid}^{size,\mu}$ may have different values for each link direction (e.g., uplink, downlink, or sidelink) or for each numerology $\mu$. Here, the numerology $\mu$ may be referred to by other terms, such as a SCS configuration, if necessary.

Each element in the resource grid for an antenna port p and a SCS configuration $\mu$ may be referred to as a resource element (RE) 420, and may be uniquely defined for each position $(k, l)_{p,\mu}$. In this case, $k$ may be a frequency axis index, and $l$ may indicate a symbol position on the time axis. $RE(k, l)_{p,\mu}$ may correspond to a physical resource used to transmit a physical channel or a signal complex value $a_{k,l}^{(p,\mu)}$. One RB 410 may be defined as consecutive $N_{sc}^{RB} = 12$ subcarriers on the frequency axis.

The 5G NR communication system has introduced the concept of BWPs in order to reduce high implementation complexity and power consumption of terminals due to the widened carrier bandwidth compared to the 3G/4G communication system. One BWP may be composed of contiguous CRBs, a starting RB position $N_{BWP,i}^{start,\mu}$ of the BWP and the number $N_{BWP,i}^{size,\mu}$ of RBs constituting the BWP may satisfy Equations 2 and 3.

[Equation 2]

$$N_{\text{grid},x}^{\text{start},\mu} \leq N_{\text{BWP},i}^{\text{start},\mu} < N_{\text{grid},x}^{\text{start},\mu} + N_{\text{grid},x}^{\text{size},\mu}$$

[Equation 3]

$$N_{\text{grid},x}^{\text{start},\mu} < N_{\text{BWP},i}^{\text{start},\mu} + N_{\text{BWP},i}^{\text{size},\mu} \leq N_{\text{grid},x}^{\text{start},\mu} + N_{\text{grid},x}^{\text{size},\mu}$$

Up to four downlink BWPs within one component carrier (CC) may be configured for one terminal, and only one downlink BWP may be activated at a time. The terminal may not receive a physical downlink shared channel (PDSCH), a physical downlink control channel (PDCCH), a channel state information reference signal (CSI-RS), or the like outside the activated BWP.

Up to four uplink BWPs within one CC may be configured for one terminal, and only one uplink BWP may be activated at a time. The terminal may not transmit a physical uplink shared channel (PUSCH), a physical uplink control channel (PUCCH), a sounding reference signal (SRS), or the like outside the activated BWP.

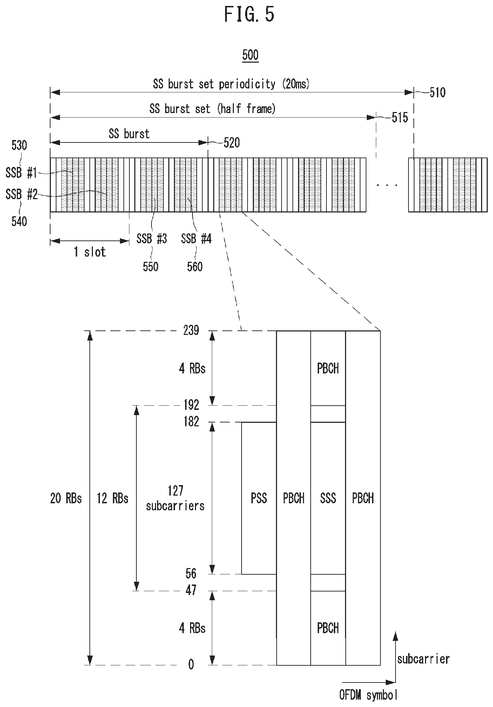

FIG. 5 is a conceptual diagram illustrating exemplary embodiments of a synchronization signal and physical broadcast channel (SS/PBCH) block or synchronization signal block (SSB) of a communication system.

Referring to FIG. 5, an SS/PBCH block 500 of a communication system may be configured with a primary synchronization signal (PSS) transmitted in 127 subcarriers in the middle of a first OFDM symbol, a secondary synchronization signal (SSS) transmitted in 127 subcarriers in the middle of a third OFDM symbol, and a physical broadcast channel (PBCH) transmitted in second, third, and fourth OFDM symbols. The PBCH occupying the widest bandwidth may be transmitted over 20 RBs, which may be 3.6 MHz based on 15 kHz SCS. The base station transmits one SSB by applying the same beam. When the number of base station antennas increases or it is necessary to operate multiple beams such as applying one or more analog beams for high frequency support, the base station may support a multi-beam operation by transmitting multiple SSBs. Here, the term 'beam' may be expressed in various terms such as a transmission precoding or a spatial transmission (TX) filter when applied in practice. However, in order not to obscure the gist of the description, 'beam' is used hereinafter as a unified term.

For example, the base station may transmit a plurality of SSBs 530, 540, 550, and 560 to represent a plurality of beams (e.g., beam #1, beam #2, beam #3, beam #4). In this case, it may be possible that one or more SSBs are transmitted within one slot according to a pattern predetermined according to each numerology. The SSBs 530, 540, 550, and 560 to which different beams are applied may be bundled into one set by being included in an SS burst 520. The terminal may assume a half-frame window having a length of 5 ms at the time of monitoring SSBs. An SS burst set 515 configured by higher layer signaling within a half-frame may include one or more SS bursts 520. If RRC configuration values are unknown or unavailable when performing initial access (IA), the terminal may receive or measure the SSBs assuming that a periodicity of the SS burst set 510 is 20 ms. As an example, the terminal may receive SSB(s) with reference to SSB configuration information identical or similar to that shown in Table 4 and Table 5.

[Table 4]

```
MIB ::=                     SEQUENCE {
    systemFrameNumber
    subCarrierSpacingCommon
    ssb-SubcarrierOffset      // SSB subcarrier offset (0~15)
    dmrs-TypeA-Position
    pdcch-ConfigSIB1
    cellBarred
    intraFreqReselection
    spare
}


MeasObjectNR ::=                SEQUENCE {
    ssbFrequency              // Absolute Radio Frequency Channel Number (ARFCN) of SSB
    ssbSubcarrierSpacing      // Numerology of SSB
    smtc1
            // first SSB measurement timing configuration (SMTC) configured with reference to SSB-MTC
    smtc2  // Second SMTC configured with reference to SSB-MTC
    ...
    ...
}

SSB-Index             // SSB index within SS-burst
```

[Table 5]

```
SSB-MTC ::=                    SEQUENCE {
                  // timing occasion configuration for SSBs to be measured by terminal
          periodicityAndOffset              CHOICE {
       sf5       // offset when a SSB reception window has a legnth of 5 subframes
       sf10      // offset when a SSB reception window has a legnth of 10 subframes
       sf20      // offset when a SSB reception window has a legnth of 20 subframes
       sf40      // offset when a SSB reception window has a legnth of 40 subframes
       sf80      // offset when a SSB reception window has a legnth of 80 subframes
       sf160     // offset when a SSB reception window has a legnth of 160 subframes
     },
     duration      // a lengh of a SSB recepion window (number of subframes)
  }


SSB-MTC2 ::=                   SEQUENCE {
     pci-List      // physical cell IDs (PCIs) following the SMTC configuration
     periodicity     // SMTC periodicity (number of subframes)
  }
```

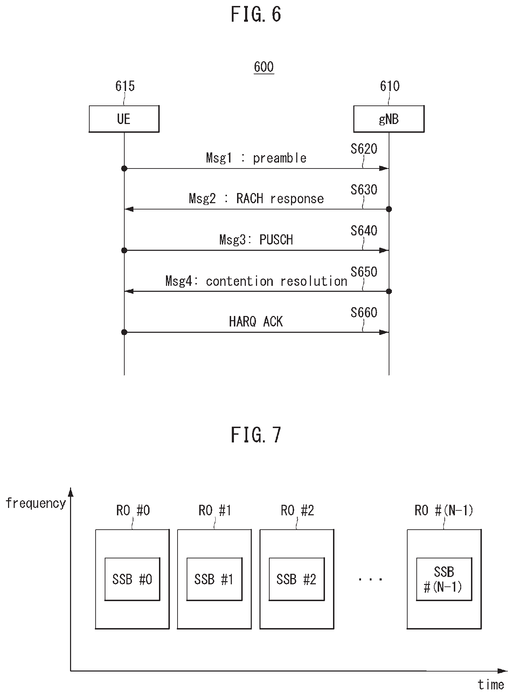

FIG. 6 is a sequence chart illustrating exemplary embodiments of a random access procedure in a communication system.

Referring to FIG. 6, in a random access procedure of a communication system 600, a terminal 615 may transmit a physical random access channel (PRACH) preamble, and the PRACH preamble may be referred to as 'Msg1' (S620). Through a transmission of the PRACH preamble, random access-radio network temporary identifier (RA-RNTI) may be determined. In this case, the RA-RNTI may be calculated by Equation 4.

[Equation 4]

$$RA\text{-}RNTI = 1 + s\_id + 14 \times t\_id + 14 \times 80 \times f\_id + 14 \times 80 \times 8 \times ul\_carrier\_id$$

In Equation 4, s_id may be an index of a first OFDM symbol of a corresponding PRACH occasion (e.g.. $0 \leq s\_id <$ 14), t_id may be an index of a first slot of the PRACH occasion within a system frame (e.g., $0 \leq t\_id < 80$), f_id may be an index of the PRACH occasion in the time domain (e.g., $0 \leq f\_id < 8$), and ul_carrier_id may be a value according to a uplink carrier type used for the preamble transmission (e.g., 0 indicates a regular uplink carrier, 1 indicates a supplementary uplink carrier).

Before the terminal transmits the PRACH preamble, the terminal may have at least part of the following information by receiving system information from the base station on a PBCH or receiving RRC signaling from the base station.

-   PRACH preamble format
-   Time/frequency resource information for RACH transmission
-   Index for a logical root sequence table
-   Cyclic shift $N_{CS}$
-   Set type (unrestricted, restricted set A, restricted set B)

Referring again to FIG. 6, as a second procedure, the base station may provide a random access response (RAR) to the terminal, which may be referred to as 'Msg2' (S630). Particularly, the base station may calculate an RA-RNTI based on Equation 4 when the base station receives the PRACH preamble from the terminal in the step S620, and may transmit a DCI by using the RA-RNTI for scrambling. The terminal may monitor a PDCCH scrambled with the RA-RNTI in a period included in a RACH response window configured by the higher layer in a type 1 PDCCH common search space (CSS). The terminal may receive the PDCCH (or the DCI transmitted from the base station through the PDCCH), and may decode the PDCCH (or the DCI). If the terminal successfully decodes the PDCCH (or the DCI), the terminal may decode a PDSCH including the RAR transmitted from the base station in the step S630. If the terminal succeeds in decoding the RAR, the terminal may identify whether an RA preamble identifier (RAPID) in the RAR matches a RAPID pre-allocated to the terminal.

As a third procedure, the terminal may transmit a PUSCH to the base station, which may be referred to as 'Msg3' (S640). To this end, the terminal may determine whether to apply a transform precoding to transmission of the PUSCH (i.e.

whether to apply discrete Fourier transform (DFT)-s-OFDM-based transmission or OFDM-based transmission) based on a higher layer parameter (e.g., msg3-transformPrecoding). Also, the terminal may determine a SCS to be used for transmission of the PUSCH according to a higher layer parameter (e.g., msg3-scs). In this case, the PUSCH of Msg3 may be transmitted through a serving cell to which the PRACH has been transmitted.

As a fourth procedure, the base station may transmit a contention resolution message to the terminal, which may be referred to as 'Msg4' (S650). The terminal may start a timer for receiving the contention resolution message, and may monitor a PDCCH scrambled with a temporary cell-RNTI (TC-RNTI) in the type 1 PDCCH CSS until the timer expires. If the terminal successfully decodes the PDCCH, the terminal may decode a corresponding PDSCH including a MAC CE, and set the TC-RNTI as a cell-RNTI (C-RNTI). After successfully decoding the Msg4, the terminal may report a hybrid automatic repeat request (HARQ) positive-acknowledgement (ACK) thereto to the base station, and may report whether the RACH procedure is successful to the base station (S660).

The RACH occasion (RO) may mean a time and frequency resource specified for reception of a RACH preamble, and the terminal may use the RO for PRACH transmission. As described above, in the 5G NR, multiple SSBs may be associated with different beams for the multi-beam operation, and the terminal may measure the multiple SSBs, and select an optimal SSB (i.e. optimal beam) based on one of various schemes such as a reference signal received power (RSRP), reference signal received quality (RSRQ), signal-to-noise ratio (SNR), signal-to-noise/interference ratio (SNIR), or the like. Thereafter, the terminal may determine a beam (i.e. TX spatial filter) to be used for PRACH transmission based on the beam (i.e. RX spatial filter) used when receiving the optimal SSB. In this case, a relationship between SSB(s) and RO(s) may be established for the purpose of allowing the base station or the network to know which SSB (i.e. beam) the terminal has selected. Through such the relationship, the base station may know the SSB (i.e. beam) selected by the terminal based on the RO in which the terminal has transmitted the PRACH. For example, the relationship between SSB(s) and RO(s) may be determined with reference to the higher layer configurations identical or similar to those shown in Table 6 and Table 7.

[Table 6]

```
RACH-ConfigCommon ::=            SEQUENCE {
    rach-ConfigGeneric        // set of RACH parameters
    totalNumberOfRA-Preambles    // the total number of RACH preambles (1~63)
    ssb-perRACH-OccasionAndCB-PreamblesPerSSB   CHOICE {
        oneEighth   // The number of preambles per SSB when one SSB is associated with eight ROs
        oneFourth   // The number of preambles per SSB when one SSB is associated with four ROs
        oneHalf     // The number of preambles per SSB when one SSB is associated with two ROs
        one        // The number of preambles per SSB when one SSB is associated with one RO
        two        // The number of preambles per SSB when two SSBs are associated with one RO
        four       // The number of preambles per SSB when four SSBs are associated with one RO
        eight      // The number of preambles per SSB when eigth SSBs are associated with one RO
        sixteen     // The number of preambles per SSB when sixteen SSBs are associated with one RO
        }
    groupBconfigured             SEQUENCE {
        ra-Msg3SizeGroupA // The size of a transport block fro contention-based RA of Group A
        messagePowerOffsetGroupB  // Threshold for preamble selection
        numberOfRA-PreamblesGroupA    // The number of CB preambles per SSB of Group A
    }
}
```

[Table 7]

```
    ra-ContentionResolutionTimer   // Initial value of a contention resolution timer
    rsrp-ThresholdSSB       // Threshold for selection of an SSB and an associated RACH resource
    rsrp-ThresholdSSB-SUL  // Threshold for selection of an SSB and an associated RACH resource in SUL
    prach-RootSequenceIndex            CHOICE { // RACH root sequence index
       1839
       1139
    },
    msg1-SubcarrierSpacing      // SCS for Msg1 transmission
    restrictedSetConfig        // one of {unrestricted, restricted set A, restricted set B}
    msg3-transformPrecoder       // whether to apply transform precoding in transmisison of Msg3
    ...
}
RACH-ConfigGeneric ::=            SEQUENCE {
    prach-ConfigurationIndex    // indicates a preamble format, etc.
    msg1-FDM              // The number of ROs FDMed at a time
    msg1-FrequencyStart       // frequency-axis offset of the lowest RO with reference to PRB 0
    zeroCorrelationZoneConfig  // N-CS configuration
    preambleReceivedTargetPower  // Target power level at a network receiving node
    preambleTransMax
            // The maximum number of RA preambe transmissions performed unitl declaration of an RA
failure
    powerRampingStep       // Power ramping step
    ra-ResponseWindow        // Msg2 (RAR) window length (number of slots)
    ...,
}
```

FIG. 7 is a conceptual diagram illustrating exemplary embodiments of SSB-RO association according to RACH configuration in a communication system.

Referring to FIG. 7, in an SSB-RO mapping relation according to the RACH configurations, in a certain frequency band, N SSBs 710-1 to 710-n having time resources which are separated from each other may be mapped to ROs 720-1 to 720-n having time resources which are separated from each other on a one-to-one basis. For example, if a higher layer parameter *msg1-FDM* is set to 1 (i.e. *msg1-FDM*=one) and a higher layer parameter *ssb-perRACH-OccasionAndCB-PreamblesPerSSB* is set to 1 (e.g., *ssb-perRACH-OccasionAndCB-PreamblesPerSSB*=one), the N different SSBs 710-1 to 710-n may be mapped to the N different ROs 720-1 to 720-n on a one-to-one basis.

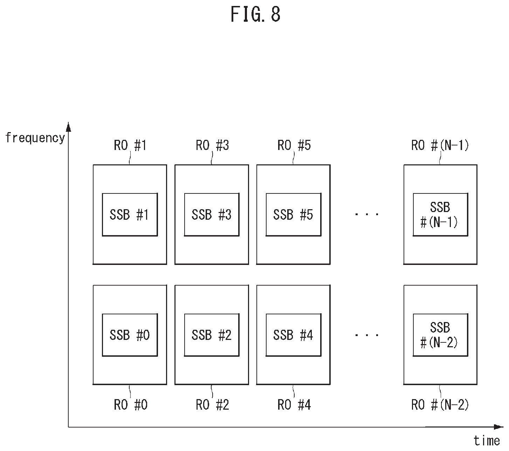

FIG. 8 is a conceptual diagram illustrating exemplary embodiments of SSB-RO association according to RACH configuration in a communication system.

Referring to FIG. 8, in an SSB-RO mapping relation according to the RACH configurations, in a first frequency band, SSBs 810-1, 810-3, 810-5, ..., and 810-(n-1) having time resources which are separated from each other may be mapped to ROs 820-1, 820-3, 820-*5*, ..., and 820-(n-1) having time resources which are separated from each other on a one-to-one basis. In addition, in a second frequency band, SSBs 810-2, 810-4, 810-6, ..., and 810-n having time resources which are separated from each other may be mapped to ROs 820-2, 820-4, 820-6, ..., and 820-n) having time resources which are separated from each other on a one-to-one basis. For example, if the higher layer parameter *msg1-FDM* is set to 2 (i.e. *msg1-FDM*=two), and higher layer parameter *ssb-perRACH-OccasionAndCB-PreamblesPerSSB* is set to 2 (e.g., *ssb-perRACH-OccasionAndCB-PreamblesPerSSB*=two), the N different SSBs 810-1 to 810-n may be mapped to the N different ROs 820-1 to 820-n which are frequency division multiplexed (FDMed) in a frequency domain, on a one-to-one basis.

Meanwhile, the 5G NR communication system may support DCI formats shown in Table 8 based on Release-16.

[Table 8]

| DCI format | Usage |
|---|---|
| 0_0 | Used for scheduling a PUSCH within one cell |
| 0_1 | Used for scheduling one or more PUSCHs within one cell, or indicating downlink feedback information for a configured grant (CG) PUSCH (i.e. CG-DFI) |
| 0_2 | Used for scheduling a PUSCH within one cell |

(continued)

| DCI format | Usage |
|---|---|
| 1_0 | Used for scheduling a PDSCH within one cell |
| 1_1 | Used for scheduling a PDSCH within one cell or triggering a one-shot HARQ-ACK codebook feedback |
| 1_2 | Used for scheduling a PDSCH within one cell |
| 2_0 | Used for notifying a slot format, an available RB set, a channel occupancy time (COT) duration, and search space set group switching to a UE group |
| 2_1 | Used for notifying PRB(s) and OFDM symbol(s) assumed not to be intended to be used for transmission to a UE group |
| 2_2 | Used for transmission of a transmission power control (TPC) for a PUCCH and a PUSCH |
| 2_3 | Used for transmission of a TPC command group for SRS transmission by one or more UEs |
| 2_4 | Used for a UE to notify PRB(s) and OFDM symbol(s) for which UL transmission from the UE is cancelled to a UE group |
| 2_5 | Used for notifying availability of soft resources |
| 2_6 | Used for notifying power saving information outside a DRX active time to one or more UEs |
| 3_0 | Used for NR sidelink scheduling within one cell |
| 3_1 | Used for LTE sidelink scheduling within one cell |

A DCI may include downlink control information for one or more cells, and may be associated with one RNTI. The DCI may be encoded through the order of 1) information element multiplexing, 2) cyclic redundancy check (CRC) addition, 3) channel coding, and 4) rate matching, and decoding may also be performed in consideration of the above steps. In the above description, "a certain DCI is associated with one RNTI" may mean that CRC parity bits of the DCI are scrambled with the RNTI. Referring to Table 8, some DCI may include scheduling information of one or more PUSCHs for a certain cell.

For example, a CRC of the DCI format 0_1 may be scrambled with a C-RNTI, configured scheduling-RNTI (CS-RNTI), semi-persistent CSI RNTI (SP-CSI-RNTI), or modulation coding scheme cell RNTI (MCS-C-RNTI). The DCI format 0_1 may include at least one of the following information.

☐ Identifier for DCI format (1 bit): Indicator indicating a UL DCI format, which is always set to 0 in the case of DCI format 0_1

☐ Carrier indicator (0 or 3 bits): Indicator indicating a CC scheduled by the corresponding DCI

☐ DFI flag (0 or 1 bit): Configured grant downlink feedback information (CG-DFI) indicator

- If the DCI format 0_1 is used for CG-DFI indication (when the DFI flag is set to 1), at least one of the following fields may be used:

    ☐ HARQ-ACK bitmap (16 bits), where the order of mapping HARQ process indexes within the bitmap is that the HARQ process indexes are mapped from the MSB to the LSB of the bitmap in ascending order. For each bit in the bitmap, a value of 1 indicates ACK, and a value of 0 indicates NACK.

    ☐ TPC command for a scheduled PUSCH (2 bits)

    ☐ All the remaining bits in the DCI format 0_1 are set to zero

- If the DCI format 0_1 is not used for CG-DFI indication (when there is no DFI flag field or DFI flag field is set to 0), at least one of the following fields may be used:

    ☐ UL/SUL indicator (0 or 1 bit): supplementary UL indicator.

☐ Bandwidth part indicator (0, 1, or 2 bits): Indicator indicating a BWP to be activated among uplink BWPs configured for the terminal.

☐ Frequency domain resource assignment: Indicator for allocating a frequency domain resource.

☐ Time domain resource assignment: Indicator for allocating a time domain resource.

☐ Frequency hopping flag (0 or 1 bit): Frequency axis hopping indicator

☐ Modulation and coding scheme (5 bits)

☐ New data indicator (NDI): Indicator indicating whether allocated data is new data or retransmission data.

☐ Redundancy version (RV): Indicator indicating an RV value when channel coding is applied to allocated data

☐ HARQ process number (4 bits): Indicator indicating a HARQ process to be allocated to scheduled data

☐ TPC command for a scheduled PUSCH (2 bits): TPC indicator

☐ SRS resource indicator: Aperiodic SRS resource selection indicator

☐ Precoding information and number of layers: Indicator indicating precoding and the number of transport layers to be used in PUSCH transmission

☐ Antenna ports: Indicator for uplink antenna ports to be used for PUSCH transmission

☐ SRS request: Indicator indicating whether to transmit aperiodic SRS

☐ CSI request: Indicator indicating whether and how to report channel state information

☐ PTRS-DMRS association: Indicator indicating a relationship between an uplink phase-noise tracking reference signal (PTRS) antenna port and a demodulation reference signal (DMRS) antenna port

☐ DMRS sequence initialization: Indicator for a DMRS sequence initialization value during OFDM-based uplink transmission

☐ UL-SCH indicator: Indicator indicating whether or not an uplink shared channel (UL-SCH) is included in a PUSCH (a PUSCH that does not include a UL-SCH needs to include CSI)

☐ Open-loop power control parameter set indication: Indicator indicating a set of open-loop power control (OPLC) parameter set

☐ Priority indicator: Uplink transmission priority indicator

☐ Invalid symbol pattern indicator: Indicator indicating whether to apply an invalid symbol pattern configured by a higher layer

As another example, a CRC of the DCI format 1_1 may be scrambled with a C-RNTI, CS-RNTI, or MCS-C-RNTI, and the DCI format 1_1 may include at least one of the following information.

☐ Identifier for DCI format (1 bit): Indicator indicating a DL DCI format, which is always set to 1 in the case of DCI format 1_1
☐ Carrier indicator (0 or 3 bits): Indicator indicating a CC scheduled by the corresponding DCI
☐ Bandwidth part indicator (0, 1, or 2 bits): Indicator indicating a BWP to be activated among downlink BWPs configured for the terminal
☐ Frequency domain resource assignment: Indicator for allocating a frequency domain resource
☐ Time domain resource assignment: Indicator for allocating a time domain resource ☐ PRB bundling size indicator: Indicator indicating a type (i.e. static or dynamic) and a size of PRB bundling

☐ Rate matching indicator: Indicator indicating a rate matching pattern configured by a higher layer

☐ ZP CSI-RS trigger: Indicator for applying aperiodic zero-power (ZP) CSI-RS

☐ 'modulation and coding scheme', 'new data indicator', and 'redundancy version' fields for a transport block 1

☐ 'modulation and coding scheme', 'new data indicator', and 'redundancy version' fields for a transport block 2

☐ HARQ process number: Indicator indicating a HARQ process to be allocated to scheduled data

☐ Downlink assignment index: DAI indicator for HARQ-ACK codebook generation in TDD operation

☐ TPC command for a scheduled PUCCH: Power control indicator for PUCCH transmission

☐ PUCCH resource indicator: Indicator indicating a PUCCH resource for transmitting HARQ-ACK information for an allocated PDSCH or a predetermined PDSCH set

☐ PDSCH-to-HARQ_feedback timing indicator: Indicator indicating a time axis offset between the allocated PDSCH and the PUCCH

☐ Antenna port(s): Indicator indicating antenna ports to be used for PDSCH transmission/reception

☐ Transmission configuration indication: Indicator indicating transmission configuration information (TCI) to be used for PDSCH transmission and reception

☐ SRS request: Indicator indicating whether to transmit aperiodic SRS

☐ DMRS sequence initialization: Indicator for a DMRS sequence initialization value used for PDSCH transmission and reception

☐ Priority indicator: PDSCH reception priority indicator

As another example, certain DCI formats may be used to deliver the same control information to one or more terminals. For example, a CRC of the DCI format 2_3 may be scrambled with a transmit power control-sounding reference signal-RNTI (TPC-SRS-RNTI), and may include at least one of the following information.

☐ Block number 1, Block number 2, ..., Block number B: Indicators indicating resource regions to which the DCI format 2_3 is applied. A starting part of the block is configured by a higher layer parameter *startingBitOfFormat2-3* or *startingBitOfFormat2-3SUL-v1530*.

- When a terminal for which a higher layer parameter *srs-TPC-PDCCH-Group* is set to type A performs uplink transmission without a PUCCH and PUSCH or uplink transmission in which SRS power control is not tied to PUSCH power control, one block is configured by the higher layer, and the following fields are defined for the block.

☐ SRS request (0 or 2 bits): Aperiodic SRS transmission indicator

☐ TPC command number 1, TPC command number 2, ...,TPC command number N: Indicators indicating uplink power control to be applied to a UL carrier indicated by a higher layer parameter *cc-IndexInOneCC-Set.*

- When a terminal for which a higher layer parameter *srs-TPC-PDCCH-Group* is set to type B performs uplink transmission without a PUCCH and PUSCH or uplink transmission in which SRS power control is not tied to PUSCH power control, one or more blocks may be configured by the higher layer, and the following fields are defined for each block.

☐ SRS request (0 or 2 bits): Aperiodic SRS transmission indicator.

☐ TPC command (2 bits)

The terminal may receive configuration information of a CORESET #0 and a search space #0, identical or similar to that shown in Table 9.

[Table 9]

```
PDCCH-ConfigSIB1 ::=            SEQUENCE {
    controlResourceSetZero
    searchSpaceZero
}


ControlResourceSetZero   // indicates a configuration value (0~15) of a CORESET #0 within an initial BWP
SearchSpaceZero          // indicates a configuration value (0~15) of a search space #0 within an initial BWP
```

The terminal may refer to the following higher layer configurations for cell-specific PDCCH monitoring, identical or similar to those shown in Tables 10 to 13.

[Table 10]

```
PDCCH-ConfigCommon ::=          SEQUENCE {
    controlResourceSetZero // indicates a configuration value (0~15) of a CORESET #0 within an initial BWP
    commonControlResourceSet
        // configure a common CORESET by referring to CORESET configuration
    searchSpaceZero    // indicates a configuration value (0~15) of a search space #0 within an initial BWP
    commonSearchSpaceList  // configures a search sapce to be used for cell-specific PDCCH monitoring by
referring to up to four search space configurations
    searchSpaceSIB1      // search space configuration for SIB1
    searchSpaceOtherSystemInformation  // search space configuration for SIB2 or other SIBs
    pagingSearchSpace          // search space configuration for paging
    ra-SearchSpace          // search space configuration for random access procedure
    ...
}
```

[Table 11]

```
ControlResourceSet ::=          SEQUENCE {
    controlResourceSetId      // CORESET ID (a value other than 0 is used)
        frequencyDomainResources   // configuration of frequency resources of a CORESET
    duration              // configuration of a time-axis length (symbols) of a CORESET
        cce-REG-MappingType            CHOICE { // CCE-to-REG mapping configuration
        interleaved            SEQUENCE {
            reg-BundleSize
            interleaverSize
            shiftIndex
        },
        nonInterleaved
    },
    precoderGranularity
    tci-StatesPDCCH-ToAddList
                // indicates a QCL relation possible between a QCL reference RS and a PDCCH DMRS
    tci-StatesPDCCH-ToReleaseList
    tci-PresentInDCI       // indicates whether a TCI field exists within the DCI format 1_1
    pdcch-DMRS-ScramblingID  // indicates a scrambling initialization value of a PDCCH DMRS
    ...
}
```

[Table 12]

```
SearchSpace ::=                SEQUENCE {
    searchSpaceId         // search space ID
    controlResourceSetId      // CORESET ID associated with the search space
monitoringSlotPeriodicityAndOffset     CHOICE { // periodicity and offset of a PDCCH monitoring slot
        sl1      // performs PDCCH monitoring in every slot
        ...
                // (omitted) monitoring offset values when a PDCCH monitoring periodicity is one of 2
```

```
to 1280 slots
      sl2560   // a monitoring offset value when a PDCCH monitoring periodicity is 2560 slots
   }
   duration    // the number of slots where a search space exists for each occasion
수
   monitoringSymbolsWithinSlot
        // a position of a first symbol on which monitoring is to be performed within a PDCCH monitoring
slot
   nrofCandidates                       SEQUENCE {
      aggregationLevel1   // The number of PDCCH candidates in case of aggregation level 1
      aggregationLevel2   // The number of PDCCH candidates in case of aggregation level 2
      aggregationLevel4  // The number of PDCCH candidates in case of aggregation level 4
      aggregationLevel8  // The number of PDCCH candidates in case of aggregation level 8
      aggregationLevel16  // The number of PDCCH candidates in case of aggregation level 16
   }
   searchSpaceType                      CHOICE { // indicates a search space type
```

[Table 13]

```
(common or UE-specific) and DCI formats
      common                       SEQUENCE {
          dci-Format0-0-AndFormat1-0          SEQUENCE {
             ...
          }
          dci-Format2-0                SEQUENCE {
            nrofCandidates-SFI                SEQUENCE {
               ...
            },
            ...
          }
          dci-Format2-1
          dci-Format2-2
          dci-Format2-3                SEQUENCE {
            dummy1
            dummy2
          }
      },
      ue-Specific                  SEQUENCE {
         dci-Formats
         ...,
      }
   }
}
```

The terminal may refer to the following higher layer configurations for UE-specific PDCCH monitoring, identical or similar to those shown in Table 14.

[Table 14]

```
PDCCH-Config ::=              SEQUENCE {
   controlResourceSetToAddModList
           // At most three CORESETs are configured by referring to CORESET configuration
      controlResourceSetToReleaseList
```

```
searchSpacesToAddModList
        // At most ten search spaces are configured by referring to search space configuration
searchSpacesToReleaseList
  downlinkPreemption    // downlink preemption indicator
    tpc-PUSCH          // configuraion of reception of a group TPC for PUSCH transmission
    tpc-PUCCH          // configuration of reception of a group TPC for PUCCH transmission
    tpc-SRS            // configuration of reception of a group TPC for SRS transmission
    ...,
}
```

The presence of one antenna port may mean a case in which a channel experienced by a symbol transmitted through the corresponding antenna port can be estimated or inferred from a channel experienced by another symbol transmitted through the same antenna port.

"Two different antenna ports are quasi co-located (QCLed)" may mean a case in which large-scale characteristics of a channel experienced by a symbol transmitted through one antenna port can be estimated or inferred from a channel experienced by a symbol transmitted through another antenna port. The large-scale characteristics of the channel may mean at least one of 'delay spread', 'Doppler spread', 'Doppler shift', 'average gain', 'average delay', and 'spatial Rx parameters'.

When time/frequency resources of a certain signal (e.g., QCL target RS) are insufficient and large-scale characteristics of a channel cannot be accurately measured with only the corresponding signal, information (i.e. QCL information) on another signal (e.g., QCL reference RS having sufficient time/frequency resources) having large-scale characteristics that can be reused for reception of the corresponding signal (i.e. QCL target RS) may be provided to the terminal to improve the channel measurement performance of the terminal. The NR communication system may support various QCL types as follows.

- QCL-Type A: including {Doppler shift, Doppler spread, average delay, delay spread}.
- QCL-Type B: including {Doppler shift, Doppler spread}
- QCL-Type C: including {Doppler shift, average delay}
- QCL-Type D: including {Spatial Rx parameters}

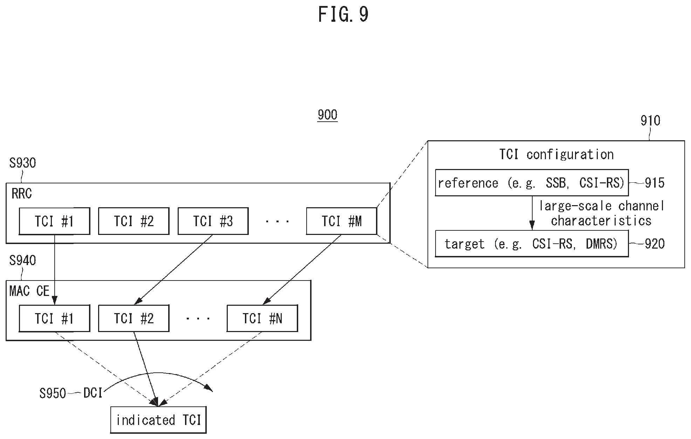

FIG. 9 is a conceptual diagram illustrating exemplary embodiments of a QCL information transfer process through TCI state configuration and indication in a communication system.

Referring to FIG. 9, in a process of transmitting QCL information through TCI state configuration and indication in a communication system 900, a base station may configure at most M TCI states to a terminal through higher layer (i.e. RRC) signaling, in accordance with a UE capability report and a maximum value (e.g., 4, 8, 64, or 128 depending on a frequency band) defined in a technical specification (S930). In this case, each TCI state configuration 910 may include information on a signal or channel (i.e. QCL reference 915) that provides large-scale channel characteristics to a signal or channel (i.e. QCL target 920) referring to the TCI. One TCI state configuration 910 may include up to two references (i.e. qcl-Type1 and qcl-Type2), the first reference may be one of the QCL-Type A, QCL-Type B, and QCL-type C (i.e. qcl-type1 ∈ {QCL-type A, QCL-type B, QCL-type C}), and the second reference may be the QCL-type D if present (i.e. qcl-type 2 = QCL-type D).

Allowing the base station to apply all the TCIs configured through the RRC signaling in real time may greatly increase implementation complexity of the terminal, the base station may transmit an activation message for some of the TCIs configured through the RRC signaling to the terminal through L2 signaling such as a MAC CE (S940). The base station may activate a maximum of N (<M) TCIs, and the terminal may receive a dynamic indication only for the activated TCI.

Thereafter, the base station may dynamically indicate to the terminal some of the activated N TCIs through L1 signaling such as a DCI (S950). The terminal may apply QCL information indicated by the corresponding TCI at a predetermined timing after receiving the L1 signaling, and may perform a reception operation for the signal or channel.

The TCI state indication steps including the 'RRC signaling (S930)', 'MAC CE signaling (S940)', and 'DCI signaling (S950)' of FIG. 9 may be partially omitted depending on a type of the QCL target RS. For example, when the QCL target is a PDSCH DMRS, and one or more TCI states are configured through RRC signaling, the base station may indicate the TCI state using all the steps of FIG. 9. However, when the QCL target is a PDSCH DMRS, and a single TCI state is configured through RRC signaling, the MAC CE signaling (S940) and the DCI signaling step (S950) may be omitted. Similarly, when the QCL target is a PDCCH DMRS, the DCI signaling step S940 may be omitted. Specifically, the terminal may obtain configuration information for the TCI states and QCL information with reference to the RRC signaling identical or similar to those shown in Table 15.

**EP 4 753 166 A1**

[Table 15]

```
TCI-State ::=                    SEQUENCE { // TCI configuration (I.1-00)
    tci-StateId     // TCI state ID
    qcl-Type1     // first QCL reference configured by referring to QCL information
    qcl-Type2     // second QCL reference configured by referring to QCL information
    ...
}


QCL-Info ::=                    SEQUENCE {
    cell              // index of a cell in which QCL reference is transmitted
    bwp-Id              // index of a BWP in which QCL reference is transmitted
    referenceSignal                CHOICE {
        csi-rs          // index of a CSI-RS to be referred when QCL reference is a CSI-RS
        ssb              // index of an SSB to be referred when QCL reference is an SSB
    },
    qcl-Type
    // QCL type to be applied to a QCL target (one of QCL-type A, QCL-type B, QCL-type C, and QCL-type
D)
    ...
}
```

The base station may instruct the terminal to activate or deactivate some of the TCI states configured by the RRC signaling through MAC CE signaling, or may instruct the terminal to apply a TCI state indicated by a MAC CE to the QCL target RS. For example, the base station may use the following MAC CE signaling according to the type of the QCL target RS.

- TCI state activation/deactivation MAC CE for a UE-specific PDSCH DMRS
- TCI state indication MAC CE for a UE-specific PDCCH DMRS
- TCI state activation/deactivation MAC CE for an enhanced UE-specific PDSCH DMRS

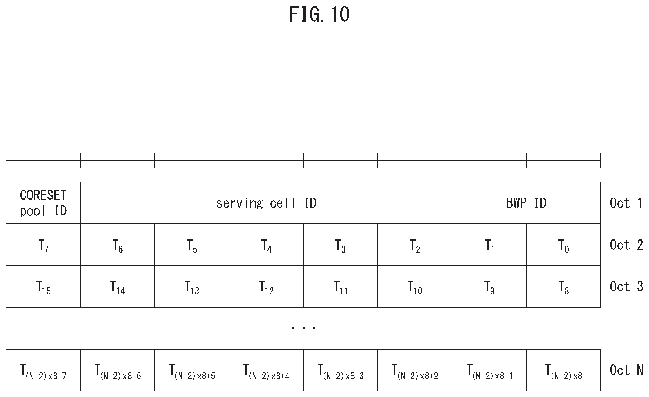

FIG. 10 is a conceptual diagram illustrating exemplary embodiments of a TCI state activation/deactivation MAC CE in a communication system.

Referring to FIG. 10, a first octet (Oct 1) in a TCI state activation/deactivation MAC CE for a UE-specific PDSCH DMRS may include a COREST pool ID field 1010, a serving cell ID field 1020, and a BWP ID field 1030, and a second octet (Oct 2) to an N-th octet (Oct N) may include Ti fields 1040 indicating TCI state IDs i. The detailed meaning of each field may be as follows, and the sizes thereof may be variable.

- Serving cell ID: a serving cell ID to which the MAC CE is applied
- BWP ID: BWP ID to which the MAC CE is applied, which indicates a BWP in association with a BWP indication field within the DCI
- $T_i$: indicates a TCI state ID i. When this value is set to 0, it may mean that a TCI state whose TCI state ID is i is deactivated, and when this value is set to 1, it may mean that a TCI state whose TCI state ID is i is activated. The TCI states activated by 1 may be sequentially mapped to TCI indication field code points within the DCI.
- CORESET pool ID: If a DCI scheduling a PDSCH is monitored in a CORESET that does not include a higher layer parameter *coresetPoolIndex*, the field may be ignored. If a DCI scheduling a PDSCH is monitored in a CORESET including the higher layer parameter *coresetPoolIndex*, $T_i$ indication may be applied only when a value of the CORESET pool ID matches a value of *coresetPoolIndex* of the CORESET.

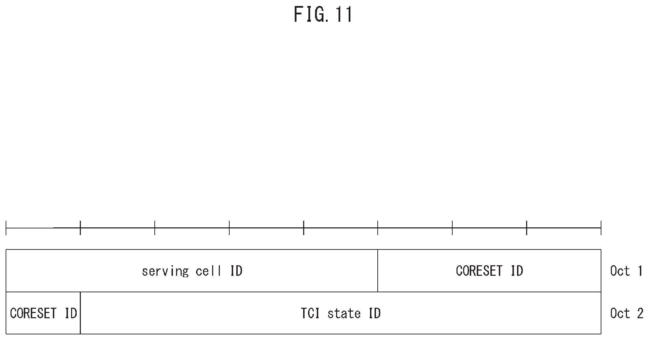

FIG. 11 is a conceptual diagram illustrating exemplary embodiments of a TCI state indication MAC CE in a communication system.

Referring to FIG. 11, a first octet (Oct 1) in a TCI state activation/deactivation MAC CE for a UE-specific PDSCH DMRS may include a serving cell ID field 1110 and a CORESET ID field 1120, and a second octet (Oct 2) may include a CORESET ID field 1130 and a TCI state ID field 1140. The sizes thereof may be variable.

- Serving cell ID: a serving cell ID to which the corresponding MAC CE is applied.
- CORESET ID: indicates a CORESET to which the MAC CE is applied. If this value is set to 0, a CORESET configured through *controlResourceSetZero* may be a CORESET #0.

19

- TCI state ID: means a TCI state ID indicated by the corresponding MAC CE.

The base station may configure spatial relation information to the terminal through higher layer (e.g., RRC) signaling in order to indicate uplink beam information. The spatial relation information may mean a signaling structure for using spatial domain filters used for transmission and reception of a reference RS for spatial TX filters for uplink transmission of a target RS according to the corresponding spatial relation. The spatial reference RS may be a downlink signal such as SSB or CSI-RS, and may also be an uplink signal such as SRS. If the reference RS is a downlink signal, the terminal may use the spatial RX filter values used for receiving the reference RS as spatial TX filter values for transmitting the target RS according to the spatial relation. If the reference RS is an uplink signal, the terminal may use the spatial TX filter values used for transmitting the reference RS as the spatial TX filter values for transmitting the target RS according to the spatial relation.

The signaling structure for the spatial relation information may vary depending on the type of target RS. For example, when the target RS is an SRS, the base station may perform RRC configuration for each SRS resource based on message identical or similar to those shown in Table 16.

[Table 16]

```
SRS-SpatialRelationInfo ::=    SEQUENCE {
    servingCellId          // index of a serving cell in which a reference RS is transmitted
    referenceSignal              CHOICE {
      ssb-Index         // SSB index when a reference RS is SSB
      csi-RS-Index      // CSI-RS resource index when a reference RS is CSI-RS
      srs                 SEQUENCE {
        resourceId     // SRS resource index when a reference RS is SRS
        uplinkBWP     // index of a UL BWP in which SRS is transmitted when a reference RS is SRS
```

```
    }
  }
}
```

For example, when the target RS is an SRS, the base station may perform RRC configuration for each SRS resource, identical or similar to those shown in Table 17.

[Table 17]

```
PUCCH-SpatialRelationInfo ::=          SEQUENCE {
    pucch-SpatialRelationInfoId    // spatial relation information ID for PUCCH
    servingCellId            // index of a serving cell in which a reference RS is transmitted
      referenceSignal                CHOICE {
        ssb-Index          // SSB index when a reference RS is SSB
        csi-RS-Index          // CSI-RS resource index when a reference RS is CSI-RS
        srs               // specifiy a SRS resource by referring to PUCCH-SRS configuration
  },
    pucch-PathlossReferenceRS-Id
              // index of a RS resource to be used for measurement of a pathloss of a PUCCH
    p0-PUCCH-Id   // index of confuring p0 for PUCCH power control
    closedLoopIndex   // configuration value of closed-loop power control
  }

PUCCH-SRS ::=   SEQUENCE {
    resource                // SRS resource index
    uplinkBWP                // index of a BWP in which SRS is transmitted
  }
```

In the 5G NR communication system, a slot format may include downlink symbol(s), uplink symbol(s), and/or flexible symbol(s).

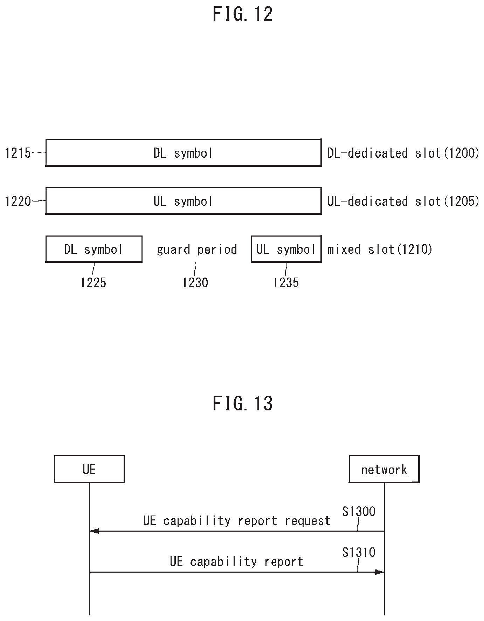

FIG. 12 is a conceptual diagram illustrating slot configurations according to slot formats in a communication system.

Referring to FIG. 12, in slot configurations according to slot formats in a communication system, a downlink dedicated slot 1200 may be a slot in which all symbols within the slot are configured only as downlink symbols 1215 according to a slot format. As another example, an uplink dedicated slot 1205 may be a slot in which all symbols within the slot are configured only as uplink symbols 1220 according to a slot format. As another example, in a downlink/uplink mixed slot 1210, some symbols within the slot may be configured as downlink symbols 1225, and some symbols within the slot may be configured as uplink symbols 1235 according to a slot format. In this case, specific symbols of the mixed slot 1210 including both the uplink and downlink symbols may be configured or indicated as a guard period 1230 for downlink-uplink switching, and the terminal may not perform transmission/reception during the guard period 1230.

In the 5G NR communication system, the base station may configure a 'slot format' over one or more slots for each serving cell to the terminal through a higher layer parameter *tdd-UL-DL-ConfigurationCommon*. In this case, the higher layer parameter *tdd-UL-DL-ConfigurationCommon* may include or refer to at least one of the following information.

-    Reference subcarrier spacing: reference numerology $\mu_{ref}$
-    Pattern 1: A first pattern.
-    Pattern 2: A second pattern.

Here, the pattern 1 or pattern 2 may include at least one of the following configurations.

-    Slot configuration periodicity (i.e. *dl-UL-TransmissionPeriodicity*): Slot configuration periodicity P expressed in units of msec
-    Number of downlink dedicated slots (i.e. *nrofDownlinkSlots*): The number $d_{slots}$ of slots composed only of downlink symbols
-    Number of downlink symbols (i.e. *nrofDownlinkSymbols*): The number $d_{sym}$ of downlink symbols
-    Number of uplink dedicated slots (i.e. *nrofUplinkSlots*): The number $u_{slots}$ of slots composed only of uplink symbols
-    Number of uplink symbols (i.e. *nrofUplinkSymbols*): The number $u_{sym}$ of uplink symbols

The slot configuration periodicity P msec of the first pattern may include S = P · $2^{\mu_{ref}}$ slots, and in this case, the numerology may follow $\mu_{ref}$. In addition, among the S slots, the first $d_{slots}$ slots may include only downlink symbols, and the last $u_{slots}$ slots may include only uplink symbols. In this case, $d_{sym}$ symbols after first $d_{slots}$ slots may be downlink symbols. In addition, $u_{sym}$ symbols before last $u_{slots}$ slots may be uplink symbols. The remaining symbols (i.e.

$$(S - d_{slots} - u_{slots}) \cdot N_{symb}^{slot} - d_{sym} - u_{sym}$$ symbols) that are not designated as downlink symbols or uplink symbols in the pattern may be flexible symbols.

If the second pattern is configured and the slot configuration periodicity of the second pattern is $P_2$, a slot configuration periodicity P + $P_2$ msec configured with a combination of the first pattern and the second pattern may include first S = P · $2^{\mu_{ref}}$ slots and second $S_2 = P_2 \cdot 2^{\mu_{ref}}$ slots. In this case, the positions and numbers of downlink symbols, uplink symbols, and flexible symbols in the second pattern may be configured with reference to the description of the first pattern based on configuration information of the second pattern. In addition, when the second pattern is configured, the terminal may assume that P + $P_2$ is a divisor of 20 msec.

The base station may override direction(s) of 'flexible symbol(s)' among symbols configured through the higher layer parameter *tdd-UL-DL-ConfigurationCommon* by using the higher layer parameter *tdd-UL-DL-ConfigurationDedicated*) based on the following information.

-    Slot configuration set (i.e. *slotSpecificConfigurationsToAddModList*): A set of slot configurations
-    Slot index (i.e. slotIndex): An index of a slot included in the set of slot configurations
-    Symbol directions (i.e. *symbols*): The directions of the symbols indicated by the slot index (i.e. *slotIndex*). If all symbol directions are downlink (symbols = allDownlink), all symbols within the corresponding slot are downlink symbols. If all symbol directions are uplink (symbols = allUplink), all symbols within the corresponding slot are uplink symbols. If the symbol directions are explicit (symbols = explicit), *nrofDownlinkSymbols* may indicate the number of downlink symbols located in the first part of the corresponding slot, and *nrofUplinkSymbols* may indicate the number of uplink symbols located in the last part of the corresponding slot. If the *nrofDownlinkSymbols* or the *nrofUplinkSymbols* is omitted, the corresponding parameter may be regarded as indicating a value of 0. The remaining symbols within the slot become flexible symbols.

In the 5G communication system, the base station may indicate a slot format to the terminal based on L1 signaling. For example, when the terminal receives a higher layer parameter *SlotFormatIndicator* from the base station, the terminal may obtain configuration information a slot format indication-RNTI (i.e. SFI-RNTI). Meanwhile, when the terminal receives a higher layer parameter *dci-PayloadSize* from the base station, the terminal may obtain configuration information of a payload size of the DCI format 2_0. In addition, the terminal may additionally receive, from the base station, information on PDCCH candidate(s), CCE aggregation level, and search space set(s) of a CORESET for monitoring the DCI format 2_0. Each slot format indication (SFI) index field in the DCI format 2_0 may indicate a slot format to be applied to each slot in a slot set of a DL BWP and a UL BWP from a slot in which the terminal has detected the corresponding DCI format 2_0. In this case, the size of the slot set may be equal to or greater than a PDCCH monitoring periodicity of the DCI format 2_0. For example, when the slot set is composed of N slots, the DCI format 2_0 may include N SFI index fields, and each SFI index field may indicate a format value of Tables 18 to 20 below. In Tables 14 and 15, 'D' may mean a downlink symbol, 'U' may mean an uplink symbol, and 'F' may mean a flexible symbol.

[Table 18]

| Slot format | Symbol number within a slot | | | | | | | | | | | | | |
|---|---|---|---|---|---|---|---|---|---|---|---|---|---|---|
| | 0 | 1 | 2 | 3 | 4 | 5 | 6 | 7 | 8 | 9 | 10 | 11 | 12 | 13 |
| 0 | D | D | D | D | D | D | D | D | D | D | D | D | D | D |
| 1 | U | U | U | U | U | U | U | U | U | U | U | U | U | U |
| 2 | F | F | F | F | F | F | F | F | F | F | F | F | F | F |
| 3 | D | D | D | D | D | D | D | D | D | D | D | D | D | F |
| 4 | D | D | D | D | D | D | D | D | D | D | D | D | F | F |
| 5 | D | D | D | D | D | D | D | D | D | D | D | F | F | F |
| 6 | D | D | D | D | D | D | D | D | D | D | F | F | F | F |
| 7 | D | D | D | D | D | D | D | D | D | F | F | F | F | F |
| 8 | F | F | F | F | F | F | F | F | F | F | F | F | F | U |
| 9 | F | F | F | F | F | F | F | F | F | F | F | F | U | U |
| 10 | F | U | U | U | U | U | U | U | U | U | U | U | U | U |
| 11 | F | F | U | U | U | U | U | U | U | U | U | U | U | U |
| 12 | F | F | F | U | U | U | U | U | U | U | U | U | U | U |
| 13 | F | F | F | F | U | U | U | U | U | U | U | U | U | U |
| 14 | F | F | F | F | F | U | U | U | U | U | U | U | U | U |
| 15 | F | F | F | F | F | F | U | U | U | U | U | U | U | U |
| 16 | D | F | F | F | F | F | F | F | F | F | F | F | F | F |
| 17 | D | D | F | F | F | F | F | F | F | F | F | F | F | F |
| 18 | D | D | D | F | F | F | F | F | F | F | F | F | F | F |
| 19 | D | F | F | F | F | F | F | F | F | F | F | F | F | U |

[Table 19]

| Slot format | Symbol number within a slot | | | | | | | | | | | | | |
|---|---|---|---|---|---|---|---|---|---|---|---|---|---|---|
| | 0 | 1 | 2 | 3 | 4 | 5 | 6 | 7 | 8 | 9 | 10 | 11 | 12 | 13 |
| 20 | D | D | F | F | F | F | F | F | F | F | F | F | F | U |
| 21 | D | D | D | F | F | F | F | F | F | F | F | F | F | U |
| 22 | D | F | F | F | F | F | F | F | F | F | F | F | U | U |
| 23 | D | D | F | F | F | F | F | F | F | F | F | F | U | U |
| 24 | D | D | D | F | F | F | F | F | F | F | F | F | U | U |
| 25 | D | F | F | F | F | F | F | F | F | F | F | U | U | U |
| 26 | D | D | F | F | F | F | F | F | F | F | F | U | U | U |
| 27 | D | D | D | F | F | F | F | F | F | F | F | U | U | U |

(continued)

| Slot format | Symbol number within a slot | | | | | | | | | | | | | |
|---|---|---|---|---|---|---|---|---|---|---|---|---|---|---|
| | 0 | 1 | 2 | 3 | 4 | 5 | 6 | 7 | 8 | 9 | 10 | 11 | 12 | 13 |
| 28 | D | D | D | D | D | D | D | D | D | D | D | D | F | U |
| 29 | D | D | D | D | D | D | D | D | D | D | D | F | F | U |
| 30 | D | D | D | D | D | D | D | D | D | D | F | F | F | U |
| 31 | D | D | D | D | D | D | D | D | D | D | D | F | U | U |
| 32 | D | D | D | D | D | D | D | D | D | D | F | F | U | U |
| 33 | D | D | D | D | D | D | D | D | D | F | F | F | U | U |
| 34 | D | F | U | U | U | U | U | U | U | U | U | U | U | U |
| 35 | D | D | F | U | U | U | U | U | U | U | U | U | U | U |
| 36 | D | D | D | F | U | U | U | U | U | U | U | U | U | U |
| 37 | D | F | F | U | U | U | U | U | U | U | U | U | U | U |
| 38 | D | D | F | F | U | U | U | U | U | U | U | U | U | U |
| 39 | D | D | D | F | F | U | U | U | U | U | U | U | U | U |

[Table 20]

| Slot format | Symbol number within a slot | | | | | | | | | | | | | |
|---|---|---|---|---|---|---|---|---|---|---|---|---|---|---|
| | 0 | 1 | 2 | 3 | 4 | 5 | 6 | 7 | 8 | 9 | 10 | 11 | 12 | 13 |
| 40 | D | F | F | F | U | U | U | U | U | U | U | U | U | U |
| 41 | D | D | F | F | F | U | U | U | U | U | U | U | U | U |
| 42 | D | D | D | F | F | F | U | U | U | U | U | U | U | U |
| 43 | D | D | D | D | D | D | D | D | D | F | F | F | F | U |
| 44 | D | D | D | D | D | D | F | F | F | F | F | F | U | U |
| 45 | D | D | D | D | D | D | F | F | U | U | U | U | U | U |
| 46 | D | D | D | D | D | F | U | D | D | D | D | D | F | U |
| 47 | D | D | F | U | U | U | U | D | D | F | U | U | U | U |
| 48 | D | F | U | U | U | U | U | D | F | U | U | U | U | U |
| 49 | D | D | D | D | F | F | U | D | D | D | D | F | F | U |
| 50 | D | D | F | F | U | U | U | D | D | F | F | U | U | U |
| 51 | D | F | F | U | U | U | U | D | F | F | U | U | U | U |
| 52 | D | F | F | F | F | F | U | D | F | F | F | F | F | U |
| 53 | D | D | F | F | F | F | U | D | D | F | F | F | F | U |
| 54 | F | F | F | F | F | F | F | D | D | D | D | D | D | D |
| 55 | D | D | F | F | F | U | U | U | D | D | D | D | D | D |
| 56 - 254 | Reserved | | | | | | | | | | | | | |
| 255 | UE determines a slot format of a slot based on a higher layer parameter *tdd-UL-DL-ConfigurationCommon* or a higher layer parameter *tdd-UL-DL-ConfigurationDedicated*, and a detected DCI format (when exists). | | | | | | | | | | | | | |

Meanwhile, it may generally be impossible to force all terminals to implement the same features. The UE capability reporting may enable high-cost terminals to implement a large amount of features with high performance, and enable low-cost terminals to implement a small amount of features with low performance. The UE capability reporting can ensure a freedom of terminal implementation for various situations, and can also report the corresponding information to the network, allowing the base station to configure each function within the limits supported by each terminal. Specific functions may be promised to be mandatory for all terminals to implement, in which case it may be possible to omit UE capability reporting for those functions.

It may be possible for a terminal to report different values of UE capability for each frequency band or duplex scheme with respect to one function. For example, a terminal may report to the base station that it supports a specific function for a frequency range 1 (FR1), which refers to a band below 6 GHz, but does not support the function for a frequency range 2 (FR2), which refers to a band above 6 GHz. As another example, a terminal may report to the base station that it supports a specific function in a TDD (e.g., unpaired spectrum) but does not support the function in a FDD (e.g., paired spectrum).

If a terminal performs UE capability reporting, the base station may need to respect (and not violate) the contents of the UE capability report when configuring, indicating, or scheduling the terminal. This means that if the base station indicates to the terminal configuration, indication, or scheduling which violates the UE capability report, the terminal may ignore it.

FIG. 13 is a sequence chart illustrating exemplary embodiments of a UE capability reporting procedure in a communication system.

Referring to FIG. 13, in the UE capability reporting procedure, the base station may transmit a UE capability report request signal to the terminal through a higher layer parameter *UECapabilityEnquiry* when the terminal is in RRC connected mode (i.e. RRC _CONNECTED state) (S 1300). In this case, the network may refer to only the UE capability report after access stratum (AS) security activation, and may not retransmit or report the UE capability report before the AS security activation to the core network (CN). Upon receiving the UE capability report request signal, the terminal may compile UE capability information according to a specific procedure, and report it to the base station through a UE capability information signal (e.g., *UECapabilityInformmation*) (S1310).

The specific procedure for compiling the UE capability information signal may include a procedure of generating at least one of a list (i.e. *supportedBandCombinationList*) of band(s) or band combination(s) (BC(s)) supported by the terminal, feature set (FS) information related to feature sets supported by the terminal, or feature set combination (FSC) information related to feature set combinations supported by the terminal. For example, when the base station requests a UE capability report from the terminal in order to obtain information on band(s) or band combination(s) supported by the terminal, the terminal may report which band(s) it supports for each radio access technology (RAT). To this end, the base station may set a RAT-type in a UE RAT capability report request signal (e.g., *UE-CapabilityRAT-Request*), which is included in a UE RAT capability report request list signal (e.g., *ue-CapabilityRAT-RequestList*) that is a higher layer message, to one of 'nr', 'eutra-nr', 'eutra', and 'eutra-fdd'. This may mean that the base station may request a UE capability report for one or more RATs or RAT combinations from the terminal, and in this case, the terminal may respond to each request for a list of support bands for a plurality of RATs or RAT combinations. For example, if the RAT-type is set to 'nr', the terminal may include a list of bands or band combinations to which NR-DC can be applied in the UE capability report. As another example, if the RAT-type is set to 'eutra-nr', the terminal may include a list of bands or band combinations applicable to multi-RAT DC (MR-DC) such as EN-DC, NGEN-DC, NE-DC, or the like in the UE capability report. In addition, when the base station requests a UE capability report, the base station may provide, to the terminal, a list of bands for which the terminal determines whether support is provided, through a higher layer parameter *frequencyBandListFilter*. For the bands included in the higher layer parameter *frequencyBandListFilter*, the terminal may determine a candidate band combination by considering 'predetermined RAT types supported for each band', 'information on RAT-types requested by the base station', etc., and may include the candidate band combination in the UE capability report.

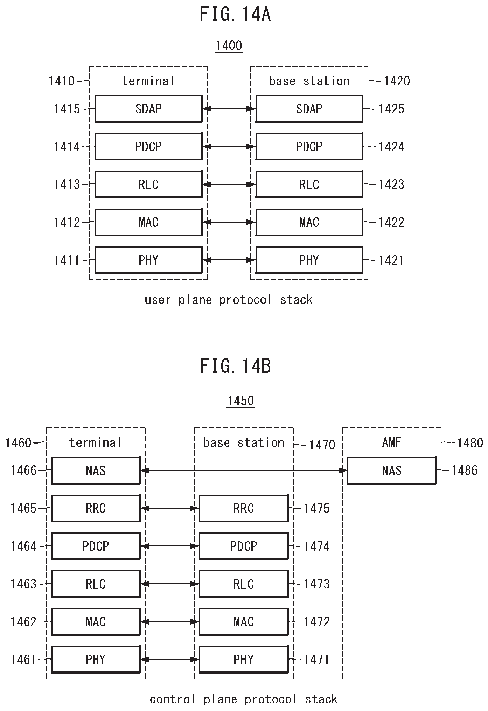

FIGS. 14A and 14 B are conceptual diagrams for describing exemplary embodiments of a user plane protocol stack structure and a control plane protocol stack structure in a communication system.

Referring to FIGS. 14A and 14B, a radio interface protocol stack or radio interface protocol stack structures 1400 and 1450 may be defined in a radio connection section between communication nodes. For example, the radio interface protocol stack may be divided into a physical layer, a data link layer, a network layer, and the like, which are vertically configured.

The radio interface protocol stack may be divided into the user plane protocol stack 1400 and the control plane protocol stack 1450. Here, the control plane may be a plane for transmitting a control signal. The control signal may be referred to as a signaling signal. The user plane may be a plane for transmitting user data.

Referring to FIG. 14A, the communication system may include a terminal 1410 and a base station 1420. The terminal 1410 may be referred to as a user equipment (UE). The base station 1420 may correspond to an eNB, a gNB, or the like. The terminal 1410 and the base station 1420 may perform mutual data signal transmission/reception based on the user plane protocol stack structure 1400 shown in FIG. 14A.

In the user plane air interface protocol stack structure 1400 of the communication system, the terminal 1410 and the base station 1420 may include PHY layers 1411 and 1421 included in L1, MAC layers 1412 and 1422, RLC layers 1413 and 1423, and packet data convergence protocol (PDCP) layers 1414 and 1424 included in L2, service data adaptation protocol (SDAP) layers 1415 and 1425 included in L3, and the like.

Referring to FIG. 14B, the communication system may include a terminal 1460 and a base station 1470. The terminal 1460 and the base station 1470 may perform mutual control signal transmission/reception based on the control plane protocol stack structure 1450 shown in FIG. 14B.

In the control plane protocol stack structure 1450 of the communication system, the terminal 1460 and the base station 1470 may include PHY layers 1461 and 1471 included in L1, MAC layers 1462 and 1472, RLC layers 1463 and 1473, and PDCP layers 1464 and 1474 included in L2, and RRC layers 1465 and 1475 included in L3, and the like.

The communication system may further include an Access and Management Mobility Function (AMF) 1480. In the control plane protocol stack structure 1450, the terminal 1460 and the AMF 1480 may include non-access stratum (NAS) layers 1466 and 1486. The base station 1470 may not include a NAS layer. In other words, in the control plane protocol stack structure 1450, the NAS layer of the base station 1470 may be transparent.

The SDAP layers 1415 and 1425 may perform the following functions. A single SDAP entity may be configured for each protocol data unit (PDU) session. In a dual-connectivity (DC) scenario, two SDAP entities may be configured. The SDAP layers 1415 and 1425 may provide a quality of service (QoS) flow to the 5G core network (5GC) based on the element(s) below.

- Mapping function between a QoS flow and a data radio bearer (DRB)

- QoS flow ID (QFI) marking within a DL packet and a UL packet

The RRC layers 1465 and 1475 may perform the following functions.

- Broadcasting of system information related to AS and/or NAS

- Paging initiated by 5GC or NG-RAN

- Establishment, maintenance, and/or release of an RRC connection between UE and NG-RAN. Addition, modification, and/or release of carrier aggregation (CA). Addition, modification, and/or release of dual-connectivity (DC) between NRs (or E-UTRA and NR)

- Security function(s) including key management

- Establishment, configuration, maintenance and/or management of signaling radio bearer(s) (SRB(s)) and/or DRB(s)

- Mobility function(s) including handover and context transfer, UE cell selection, UE cell reselection, control of cell selection and/or cell reselection, inter-RAT mobility

- QoS management function(s)

- UE management reporting, control of reporting

- Detection and/or recovery of radio link failure (RLF)

- NAS message transfer between NAS and UE

The PDCP layers 1414 and 1424 for the user plane may provide radio bearers to the SDAP layers 1415 and 1425 based on the following function(s).

- Sequence numbering

- Header compression and decompression

- Transfer of user data

- Reordering and duplicate detection

- PDCP PDU routing

- Retransmission of PDCP SDU(s)

- Ciphering and deciphering

- PDCP SDU discard

- Data recovery and PDCP re-establishment for RLC AM

- Duplication of PDCP PDU(s)

The PDCP layer 1464 and 1474 for the control plane may provide radio bearers to the RRC layer based on the following function(s).

- Sequence numbering

- Ciphering, deciphering, and integrity protection

- Transfer of control plane data

- Duplicate detection

- Duplication of PDCP PDU(s)

The RLC layers 1413 and 1423 for the user plane may provide RLC channels to the PDCP layers 1414 and 1424 based on the following function(s).

- Transfer of upper layer PDU(s)

- Sequence numbering independent of PDCP sequence numbers

- Error correction through ARQ

- Segmentation and re-segmentation

- Reassembly of SDU

- RLC SDU discard

- RLC re-established

The MAC layer 1412, 1422, 1462, and 1472 may provide logical channels to the RLC layer 1413, 1423, 1463, and 1473 based on the following function(s).

- Mapping between logical channels and transport channels

- Multiplexing/demultiplexing of MAC SDU(s) belonging to one or different logical channels into/from TB(s) delivered to/from the physical layer on transport channels

- Scheduling information reporting

- Error correction through HARQ

- Priority handling between UEs by means of dynamic scheduling

- Priority handling between logical channels of one UE by means of logical channel prioritization

- padding

The PHY layer 1411, 1421, 1461, and 1471 may provide transport channels to the MAC layer 1412, 1422, 1462, and 1472.

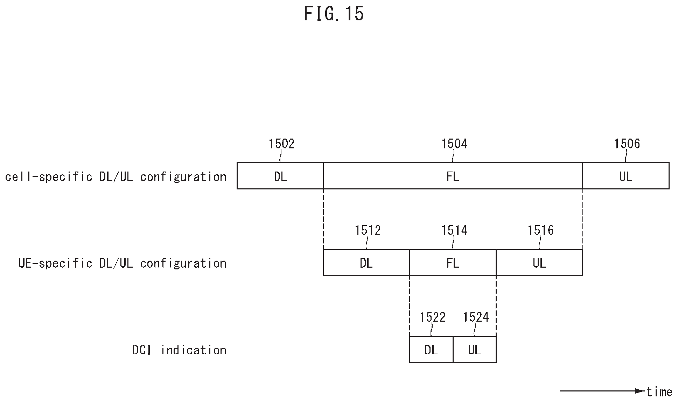

FIG. 15 is a conceptual diagram illustrating exemplary embodiments of a slot format configuration method.

Referring to FIG. 15, a slot format within a time period may be configured by a cell-specific DL/UL configuration parameter (e.g., *tdd-UL-DL-ConfigurationCommon*). According to the cell-specific DL/UL configuration parameters, a DL period 1502, FL period 1504, and UL period 1506 may be configured. The DL period 1502 may include DL symbol(s) and/or DL slot(s). The FL period 1504 may include FL symbol(s) and/or FL slot(s). The UL period 1506 may include UL symbol(s) and/or UL slot(s).

The FL period 1504 configured by the cell-specific DL/UL configuration parameter may be configured in detail by a UE-specific DL/UL configuration parameter (e.g., *tdd-UL-DL-ConfigurationDedicated*). According to the UE-specific DL/UL configuration parameter, the FL period 1504 may be reconfigured into a DL period 1512, FL period 1514, and UL period 1516. The DL period 1512 may include DL symbol(s) and/or DL slot(s). The FL period 1514 may include FL symbol(s) and/or FL slot(s). The UL period 1516 may include UL symbol(s) and/or UL slot(s).

The FL period 1514 configured by the cell-specific DL/UL configuration parameter and the UE-specific DL/UL configuration parameter may be configured in detail by DCI (e.g., DCI format 2_0, SFI). According to the DCI, the FL period 1514 may be reconfigured into a DL period 1522 and a UL period 1524. The DL period 1522 may include DL symbol(s) and/or DL slot(s). The UL period 1524 may include UL symbol(s) and/or UL slot(s).

The 5G communication system can provide technologies for improving radio coverage and/or reducing network configuration costs. For example, the 5G communication system can provide integrated access and backhaul (IAB) technology that provides wireless backhaul/fronthaul that can coexist with a radio access network and repeater technology that covers shadow areas at low cost.

After an IAB node constituting the IAB network completely decodes a received signal, the IAB node may re-encode the decoded received signal, and amplify and transmit it. The IAB node may be classified as a type of regenerative relay. To this end, the IAB node may support a control plane (CP) and a user plane (UP) from the parent node to the terminal based on a protocol stack structure including the L1 and L2 layers, or higher layers.

The IAB node constituting the IAB network has an advantage of being able to perform various operations including operations as a base station and a terminal. On the other hand, the IAB node has disadvantages in that implementation complexity and production cost are relatively high, and a delay required for retransmission may be relatively large.

The radio frequency (RF) repeater may perform amplification and retransmission operations of received signals. The RF repeater may be a non-regenerative repeater.

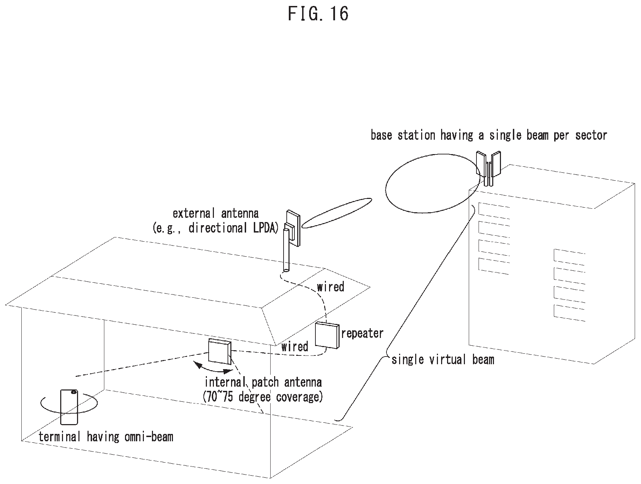

FIG. 16 is a conceptual diagram illustrating exemplary embodiments of a commercial RF repeater.

Referring to FIG. 16, a commercial RF repeater may cover an indoor shadow area. The commercial RF repeater may include a first antenna (e.g., outdoor antenna) for receiving signals from a base station outdoors, a repeater for amplifying and retransmitting the received signals, and a second antenna (e.g., indoor patch antenna) for retransmitting the amplified signals indoors. The first antenna, repeater, and second antenna may be connected wired or wirelessly. The commercial RF repeater may operate in an FR1 band. In an FR1 band, the base station (e.g., eNB, gNB) may use one beam per cell or one sector.

In downlink communication, the first antenna may operate as a reception antenna and the second antenna may operate as a transmission antenna. In uplink communication, the first antenna may operate as a transmission antenna and the second antenna may operate as a reception antenna.

The first antenna may be a directional log-periodic dipole array (LPDA) antenna. The first antenna may be manually installed to face the base station. The second antenna that retransmits the amplified signals may be a patch antenna. An effective coverage of the second antenna may be approximately 70 to 75 degrees. The second antenna may support a terminal with omni-beam indoors.

The base station may recognize a beam of the base station, a beam of the first antenna of the commercial RF repeater, and a beam of the second antenna of the commercial RF repeater as one transmission beam. The one transmission beam may be a single virtual Tx beam. The base station may recognize a beam of the first antenna of the commercial RF repeater, a beam of the second antenna of the commercial RF repeater, and a beam of the terminal as one reception beam. The one reception beam may be a single virtual Rx beam.

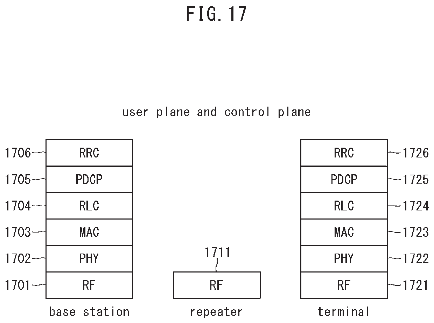

FIG. 17 is a conceptual diagram illustrating exemplary embodiments of protocol stacks of a control plane and a user plane in a communication system having an RF repeater.

Referring to FIG. 17, the base station and the terminal may each have PHY layers 1702 and 1722, MAC layers 1703 and 1723, RLC layers 1704 and 1724, PDCP layers 1705 and 1725, and RRC layers 1706 and 1726. The PHY layer may be a layer 1 (L1). The MAC layer, RLC layer, and PDCP layer may be a layer (L2). The RRC layer may be a layer (L3). The base station and the terminal may each transmit and receive signals through RFs 1701 and 1721. The RF repeater may not include a PHY layer, MAC layer, RLC layer, PDCP layer, and RRC layer. The RF repeater may include an RF 1711. The RF repeater may have a transparent functionality. The RF 1711 of the RF repeater may amplify signals and retransmit the amplified signals.

In the environment of FIGS. 16 and 17, the repeater (e.g., RF repeater) may simply repeatedly perform RF amplification/retransmission functions. The repeater that only performs RF amplification/retransmission functions may be referred to as an RF repeater. Therefore, the implementation complexity and cost of the RF repeater may be low. The base station and the network may not be able to secure control over the RF repeater. Therefore, it may be difficult to expect improvement in signal quality and control of the amount of interference through explicit management/indication/control and/or implicit management/indication/control of beams of the repeater.

The performance of the RF repeater may be limited in a time division duplexing (TDD) band that requires DL/UL switching and/or a frequency band (e.g., 3.5 GHz band or FR2 band) that requires multi-beam operations. In the 5G communication system, a direction (e.g., DL, UL, flexible (FL)) of slot(s) and/or symbol(s) may be dynamically indicated by L1 signaling (e.g., slot format configuration, slot format indication), and a beam/TCI/quasi-colocation (QCL) for each channel may be dynamically indicated. Since the RF repeater does not decode a transmission signal of the base station, it cannot recognize the indication.

To resolve the above-described problem, an advanced repeater capable of decoding a part or all of the base station's transmission signals may be considered. The advanced repeater may be referred to as a smart relay, enhanced relay, low-cost IAB node, network-controlled repeater (NCR), or NWC repeater.

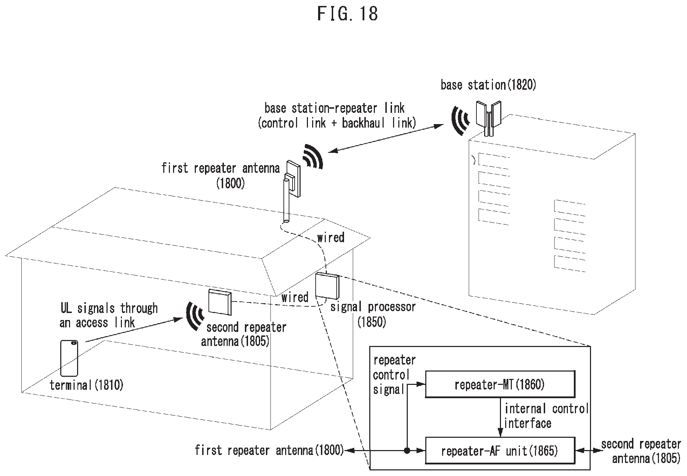

FIG. 18 is a conceptual diagram illustrating exemplary embodiments of NCR.

Referring to FIG. 18, an NCR 1850 may include one or more antennas or one or more antenna groups 1800 and 1805 that transmit and receive signals with communication nodes (e.g., base station 1820 and terminal 1810). In the present disclosure, 'antenna group' may be used with a meaning including 'antenna'. An antenna group may be interpreted as an antenna, antenna group, or antenna panel depending on a context. The NCR may include a signal processor 1850, a first antenna group 1800 connected to the signal processor 1850, and a second antenna group 1805 connected to the signal processor 1850. The first antenna group 1800 may be referred to as a first repeater antenna. The first antenna group 1800 may perform a radio connection procedure with the base station 1820 in an outdoor environment. The second antenna group 1805 may be referred to as a second repeater antenna. The second antenna group 1805 may perform a radio connection procedure with the terminal 1810 in an indoor environment.

A base station-repeater link may include a control link through which a signal for the base station to control the repeater is transmitted and a backhaul link through which a signal for the base station to provide services to the terminal is transmitted. In the present disclosure, the base station-repeater link may refer to a link between the base station and a repeater, and the repeater may refer to the NCR (e.g., advanced repeater). A radio link between the repeater and the terminal may be an access link.

The signal processor 1850 of the NCR may include a repeater-mobile terminal (MT) 1860 and a repeater-amplify and forward (AF) unit 1865. The repeater-MT 1860 may receive a control signal from the base station and process the control signal. The repeater-AF unit 1865 may amplify a signal of the base station and retransmit the amplified signal. The repeater-MT 1860 and the repeater-AF unit 1865 may be connected to a radio link of the base station 1820 via the first antenna group 1800. The repeater-MT 1860 may receive control information (e.g., control signal) for the repeater from the first antenna group 1800, and indicate a control operation of the repeater based on the control information to the repeater-AF unit 1865 through an internal control interface. In the present disclosure, the control information may be RRC parameter, MAC CE, DCI, UCI, and/or side control information (SCI).

The repeater-AF unit 1865 may amplify a signal of the base station received from the first antenna group 1800 according to an indication, and retransmit the amplified signal to the terminal through the second antenna group 1805. Alternatively, the repeater-AF unit 1865 may amplify a signal of the terminal received from the second antenna group 1805 according to an indication, and retransmit the amplified signal to the base station through the first antenna group 1800.

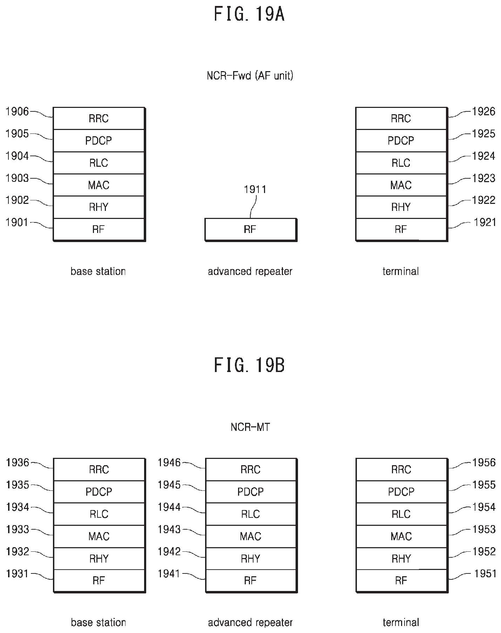

FIG. 19A is a conceptual diagram illustrating exemplary embodiments of a protocol stack of a user plane of an advanced repeater, and FIG. 19B is a conceptual diagram illustrating exemplary embodiments of a protocol stack of a control plane of an advanced repeater.

Referring to FIGS. 19A and 19B, the base station and the terminal may each have PHY layers 1902, 1922, 1932, and 1952, MAC layers 1903, 1923, 1933, and 1953, RLC layers 1904, 1924, 1934, and 1954, PDCP layers 1905, 1925, 1935, and 1955, and RRC layers 1906, 1926, 1936, and 1956. The base station and the terminal may each transmit and receive signals through RFs 1901, 1921, 1931, and 1951. The user plane of the advanced repeater may not include a PHY layer, MAC layer, RLC layer, PDCP layer, and RRC layer. The user plane of the advanced repeater may include an RF 1911. The user plane of the advanced repeater may have a transparent functionality. The RF 1911 of the advanced repeater may amplify signals and retransmit the amplified signals.

The control plane of the advanced repeater may include an RF 1941 and a PHY layer 1942. The RF 1941 may perform a transmission function. For management of the repeater's function(s) (e.g., beam configuration, DL/UL configuration, slot format configuration, on-off configuration, power control, etc.), at least one of a PHY layer 1942, MAC layer 1943, RLC layer 1944, PDCP layer 1945, or RRC layer 1946 may be added. The at least one of the PHY layer 1942, MAC layer 1943, RLC layer 1944, PDCP layer 1945, or RRC layer 1946 may transmit and receive beam management/indication information, slot format management/indication information, information indicating whether to perform retransmission operations of the repeater (e.g., on-off indicator of the repeater), information for controlling/adjusting a power of the repeater (e.g., power control indicator of the repeater), and/or capability information of the repeater (e.g., UE capability report). The at least one of the PHY layer 1942, MAC layer 1943, RLC layer 1944, PDCP layer 1945, or RRC layer 1946 may control various beams, beam combinations, and/or slot formats in a base station-repeater link and/or a repeater-terminal link. The base station-repeater link may refer to a link between the base station and the repeater. The repeater-terminal link may refer to a link between the repeater and the terminal.

The protocol stack of the repeater's control plane and/or user plane may be configured variously. The protocol stack of the control plane and/or user plane of the repeater may not be limited to the exemplary embodiments of FIGS. 19A and/or 19B. Depending on an implementation of the repeater, the protocol stack may be extended or omitted. For example, if operations of the repeater does not depend on signaling of some higher layers, in the exemplary embodiment of FIGS. 19A and/or 19B, some layers (e.g., RLC layer 1944, PDCP layer 1945, and /or RRC layer (1946) may not be included in the repeater. The repeater may have various internal structures depending on the number and/or configuration of amplification units including power amplifiers (PAs) and/or RF amplifiers. The amplification unit may be configured as one or more amplifier groups.

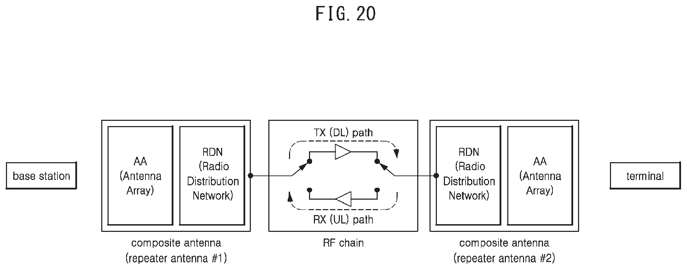

FIG. 20 is a conceptual diagram illustrating exemplary embodiments of NCR amplifier structures and RF chain configurations according to the amplifier structures.

Referring to FIG. 20, each of antenna groups (e.g., repeater antenna #1 and repeater antenna #2) of a repeater may include an antenna array (AA) and a radio distribution network (RDN). The RDN may distribute signals from antenna elements within the AA into RF chains. The repeater may have a separate amplifier for each of a TX (DL) path an RX (UL) path. The repeater may connect the antenna group(s) to the TX (DL) path or RX (UL) path depending on a transmission direction (e.g., uplink or downlink) determined (e.g., indicated or detected) at a certain time point.

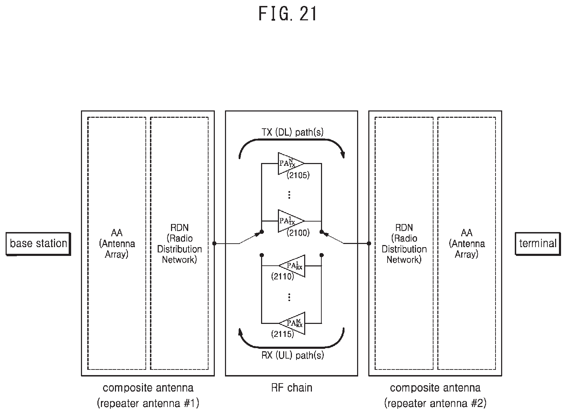

FIG. 21 is a conceptual diagram illustrating exemplary embodiments of NCR amplifier structures and RF chain configurations according to the amplifier structures.

Referring to FIG. 21, each of antenna groups (e.g., repeater antenna #1 and repeater antenna #2) of a repeater may include an AA and an RDN. A repeater antenna may refer to a relay antenna. The RDN may distribute signals from antenna elements within the AA into RF chains. The repeater may support carrier aggregation (CA) functions, dual-connectivity (DC) functions, etc. in different frequency bands. The repeater may support multi-TRP functions. The repeater may include a plurality of power amplifiers (PAs) 2100, 2105, 2110, and 2115 to support various types of wireless links (e.g., backhaul link, control link, access link, etc.) between the base station, repeater, and terminal.

Some PAs 2100 and 2105 among the plurality of PAs may be used exclusively for downlink. Some other PAs 2110 and 2115 among the plurality of PAs may be used exclusively for uplink. Some other PAs among the plurality of PAs may be used commonly for downlink and uplink. Different frequency bands supported by the PAs 2110 and 2115 used for uplink transmission may refer to different frequency ranges, different cell groups (CGs), or different uplink cells (e.g., UL component carriers (CCs)). Different TRPs supported by the PAs 2110 and 2115 used for uplink transmission may refer to different reception points, different transmission points, different spatial relations, different UL TCIs, or different joint TCIs. In other words, different TRPs supported by the PAs 2110 and 2115 used for uplink transmission may correspond to uplink channels/signals (e.g., PUCCH, PUSCH, SRS, PRACH, etc.) associated with different spatial relations, different UL TCIs, or different joint TCIs.

Different backhaul links and/or different control links supported by the PAs 2110 and 2115 used for uplink transmission may be links for uplink channels/signals (e.g., PUCCH, PUSCH, SRS, PRACH, etc.) allocated to the repeater (e.g., repeater-MT, NCR-MT) or channels/signals transmitted to the base station through a passband of the repeater's backhaul link. The repeater may select at least one TX path or at least one RX path connected to the antennas.

The repeater may include a first PA for uplink transmission in a first uplink cell within a first cell group and a second PA for uplink transmission in a second uplink cell within a second cell group. The first PA and the second PA may be different PAs. Alternatively, the first PA and the second PA may be the same PA. One uplink PA may be used for a plurality of uplink cells. In other words, the same uplink PA may be shared for a plurality of uplink cells.

The repeater may include a first PA for uplink transmission in a first uplink cell through the control link and a second PA for uplink transmission in a second uplink cell (or passband) through the backhaul link. The first PA and the second PA may be different PAs. Alternatively, the first PA and the second PA may be the same PA. One uplink PA may be used for the control link and backhaul link. In other words, the same PA may be shared for the control link and backhaul link.

The type of repeater may be modified appropriately. Various types of repeaters may be used, and the repeaters may not be limited to the exemplary embodiment shown in FIGS. 20 and/or 21. For example, multiple PA pairs may be configured for each TX (DL) path or RX (UL) path. The repeater may include one PA pair. Alternatively, the repeater may include a combination of multiple PA pairs.

The repeater (e.g., NCR) may transmit different uplink signals (e.g., uplink signal of the repeater-MT, uplink signal of the terminal received at the antenna group #2). The different uplink signals may be amplified signals. The uplink signal may have a meaning indicating an uplink signal and/or an uplink channel. A transmission power of the uplink signal may be determined based on Equation 5 below.

[Equation 5]

$$P(i,l) = \min \begin{cases} P_{CMAX}(i) \\ P_0(i) + 10\log\left(2^{\mu} \times M_{RB}\right) + \alpha(i) \times PL + \Delta(i) + f(i,l) \end{cases}$$

In Equation 5, $i$ may indicate a transmission occasion. A transmission occasion may refer to a transmission time. $l$ may mean a closed-loop power control adjustment state. $P_{CMAX}(i)$ may mean the maximum transmission power of the terminal. $P_0(i)$ may mean a nominal UE transmission power. $2^{\mu}$ may indicate an SCS. $M_{RB}$ may indicate the number of RBs allocated for uplink transmission. $\alpha(i)$ may indicate a fractional power control coefficient. $PL$ may indicate a measured path loss. $\Delta(i)$ may indicate an offset according to a modulation and coding scheme (MCS). $f(i,l)$ may indicate a closed loop power control value.

Depending on a type (e.g., PUSCH, PUCCH, SRS, PRACH, etc.) of channel and/or signal transmitted in a transmission occasion, the types and/or definitions of the factors in Equation 5 may be changed. For example, in Equation 5, $P_{CMAX,f,c}$ may be used instead of $P_{CMAX}(i)$. $P_{CMAX,f,c}$ may mean the maximum transmission power in a carrier $f$ of a serving cell c.

If a transmission power (e.g., instantaneous transmission power) determined in a certain transmission occasion is greater than or equal to the maximum transmission power, Equation 5 may mean that the transmission power in the transmission occasion (i.e. the certain transmission occasion) is set to the maximum transmission power. The maximum transmission power may be determined depending on the terminal's implementation or the base station's configuration.

The repeater may multiplex different uplink signals and transmit the multiplexed uplink signals. For example, a signal #1 among the different uplink signals may be an uplink signal of the repeater-MT which is transmitted through the control link, and a signal #2 among the different uplink signals may be an uplink signal transmitted through the backhaul link. In other words, the signal #2 may be the terminal's uplink signal (e.g., amplified uplink signal) received at the antenna group #2. The repeater may multiplex the uplink signals based on at least one of multiplexing modes below.

- Time division multiplexing (TDM) mode: The signal #1 and signal #2 may be transmitted using different time resources.

- Frequency division multiplexing (FDM) mode: The signal #1 and signal #2 may be transmitted using different frequency resources. Time resources in which the signal #1 and signal #2 are transmitted may be the same time resource or partially overlapping time resources.

- Spatial division multiplexing (SDM) mode: The signal #1 and signal #2 may be transmitted using different spatial resources (e.g., beams, antenna domain). Time resources in which the signal #1 and signal #2 are transmitted may be the same time resource or partially overlapping time resources. Frequency resources in which the signal #1 and signal #2 are transmitted may be the same frequency resource or partially overlapping frequency resources.

In Equation 5, $P_{CMAX}(i)$ may be determined for each uplink cell. $P_{CMAX}(i)$ may be determined differently for each uplink cell depending on a combination (e.g., the number of PAs allocated to each uplink cell, the number of uplink cells supported by each PA) actually applied to the repeater among various combinations of uplink PAs.

Beam(s) and/or on-off for the repeater (e.g., NCR) may be indicated. In order to provide the NCR-MT with beam indication for the NCR's access link (e.g., indication of beam(s) of the repeater for the link between the first repeater antenna 1800 and the terminal 1810 in FIG. 18), the base station may perform various types of beam indications. The various types of beam indications may include aperiodic (Ap) beam indication, semi-persistent (Sp) beam indication, and/or periodic (P) beam indication. The Ap beam indication, Sp beam indication, and/or P beam indication may be signaled through at least one of RRC configuration, MAC CE, or DCI for beam indication. The Ap beam indication, Sp beam indication, and/or P beam indication may include at least one of the following information. In other words, the Ap beam indication, Sp beam indication, and/or P beam indication may include at least one index among indexes for combinations of the following information.

- Beam index

- Time resource index (e.g., slot index, symbol index)

- Slot periodicity (e.g., slot pattern)

- Slot offset

- Symbol periodicity (e.g., symbol pattern)

- Symbol offset

The Ap beam indication may be information on a resource set (i.e. resource set information) for indicating an Ap beam (e.g., resource set associated with the Ap beam). The Ap beam indication may mean an Ap resource set. The Sp beam indication may be information on a resource set for indicating an Sp beam (e.g., resource set associated with the Sp beam). The Sp beam indication may mean an Sp resource set. The P beam indication may be information on a resource set for a P beam (e.g., resource set associated with the P beam). The P beam indication may mean a P resource set. The resource set information may be referred to as resource information, resource set, etc.

If different types of beam indications (e.g., resource sets associated with the beam indications) are allocated to a certain time resource, the NCR may perform operations according to one beam indication based on priorities of the beam indications. The priorities for beam indications may be defined as 'Ap beam indication > Sp beam indication > P beam indication'. In other words, the Ap beam indication may have the highest priority, and the P beam indication may have the lowest priority. The priorities for beam indications (hereinafter referred to as 'beam indication priorities') may be configured by the base station. For example, the base station may transmit information on the beam indication priorities to communication node(s) (e.g., terminal, NCR, IAB node, etc.) through signaling. The communication node may identify information on the beam indication priorities configured by the base station. The beam indication priorities may mean resource set priorities.

If an Ap beam indication and an Sp beam indicating are allocated to a certain time resource (e.g., the same time resource, partially overlapping time resources), the NCR may ignore the Sp beam indication based on the beam indication priorities (e.g., resource set priorities), and apply the Ap beam indication to the certain time resource. Allocation of the Ap beam indication and Sp beam indication to the same time resource may mean that the Ap beam indication and the Sp beam indication overlap in the same time resource. If an Ap beam indication and a P beam indication are allocated to a certain time resource, the NCR may ignore the P beam indication based on the beam indication priorities, and apply the Ap beam indication to the certain time resource. If an Sp beam indication and a P beam indication are allocated to a certain time resource, the NCR may ignore the P beam indication based on the beam indication priorities, and apply the Sp beam indication to the certain time resource.

A priority of a beam indication (e.g., resource set) with the priority indicator (e.g., priority flag) may be higher than a priority of a beam indication (e.g., resource set) without the priority indicator (e.g., priority flag). A beam indication with the priority flag may be expressed as 'beam indication configured with the priority flag' and/or 'beam indication associated with the priority flag'. If different types of beam indications (e.g., Ap beam indication, Sp beam indication, and/or P beam indication) are allocated to a certain time resource, and either the Sp beam indication or P beam indication has the priority flag, the NCR may determine that a priority of the Sp beam indication with the priority flag is higher than a priority of the Ap beam indication, and the NCR may determine that a priority of the P beam indication with the priority flag is higher than the priority of the Ap beam indication. The NCR may apply a beam indication based on beam indication priorities considering the priority flag.

Depending on a context, 'Ap beam indication' may be interpreted as 'Ap beam indication without the priority flag'. Depending on a context, 'Sp beam indication' may be interpreted as 'Sp beam indication without the priority flag'. Depending on a context, 'P beam indication' may be interpreted as 'P beam indication without the priority flag'. If an Ap beam indication and an Sp beam indication with the priority flag are allocated to a certain time resource, the NCR may ignore the Ap beam indication in the certain time resource, and apply the Sp beam indication with the priority flag to the certain time resource. If an Ap beam indication and a P beam indication with the priority flag are allocated to a certain time resource, the NCR may ignore the Ap beam indication in the certain time resource, and apply the P beam indication with the priority flag to the certain time resource.

The NCR may not expect to receive multiple P beam indications (e.g., P resource sets) indicating different beams for the same time resource (e.g., specific time point). If the P beam indications collide in the time resource, operations of the NCR in the time resource may be undefined. The NCR may not expect to receive multiple Sp beam indications indicating different beams for the same time resource (e.g., specific time point). If the multiple Sp beam indications collide in the time resource, operations of the NCR in the time resource may be undefined.

If multiple Ap beam indications indicating different beams for the same time resource (e.g., specific time point) are received, the NCR may apply the most recently received Ap beam indication among the multiple Ap beam indications. In other words, if multiple Ap beam indications collide in the time resource, only one Ap beam indication (e.g., the most recent Ap beam indication) may be valid in the time resource.

If no beam indication is allocated to a certain time resource, the NCR may not perform retransmission operations in the certain time resource. In other words, an output of the NCR-Fwd (e.g., repeater-AF unit 1865 shown in FIG. 18) may be in the off state in the certain time resource, and the output of the NCR-Fwd may be maintained as a value less than a predefined value.

The NCR may select at most one beam indication in a certain time resource (e.g., specific time point) based on the beam indication priorities and/or beam determination rules (e.g., beam selection rules), and perform communication (e.g., transmission operation and/or reception operation) on the access link using the selected beam indication. The NCR may not provide services to multiple terminals at the same time, the NCR may not be connected to multiple base stations at the same time, and the NCR may not support multi-carrier operations or multi-carrier scenarios. Therefore, the NCR may support scenarios for single beam operations. The multi-carrier operations may include CA operations and/or DC operations.

In a future communication system, it may be necessary for the NCR (e.g., repeater) to provide services for multiple terminals at the same time, it may be necessary for the NCR to be connected to multiple base stations at the same time, and it may be necessary for the NCR to support multi-carrier operations or multi-carrier scenarios. Considering the above needs, it may be necessary to apply beam indication priorities and/or beam determination rules to multi-beam operations.

Considering various repeater operation scenarios, methods for determining beam priorities (e.g., priorities of resource sets associated with beams) for multi-beam operations of the repeater will be described. Exemplary embodiments of the present disclosure may be applied in the same or similar manner even when a transmission power of the repeater is controlled by a value other than an absolute value (e.g., a relative value such as repeater gain control).

Depending on a multiplexing mode, control (e.g., allocation or distribution) of a transmission power of the repeater may become ambiguous. The ambiguity problem may similarly occur in other operation mode(s). Other operation mode(s) may include mode(s) according to a DL-UL direction (or downlink/flexible/uplink (DFU) configuration/indication), mode(s) according to a beam direction, and mode(s) according to antenna classification. The DFU configuration/indication may mean configuration/indication for DL resources, FL resources, and/or UL resources. The DFU configuration/indication may mean configuration/indication by *TDD-UL-DL-ConfigCommon, TDD-UL-DL-ConfigDedicated,* or DCI format 2_0 (e.g., slot format indicator (SFI)). The DL resources may mean DL symbols and/or DL slots. The UL resources may mean UL symbols and/or UL slots. The FL resources may mean FL symbols and/or FL slots. The DFU configuration/indication may mean configuration/indication for DL resources, FL resources, and/or UL resources according to a duplex mode. The duplex mode may be time division duplex (TDD), frequency division duplex (FDD), subband full duplex (SBFD), and/or full duplex (FB). Exemplary embodiments of the present disclosure will be described focusing on operations of the repeater-MT (e.g., NCR-MT), but the operations of the repeater-MT may be interpreted as operations of the terminal. In other words, the terminal may perform the same or similar operations as those of the repeater-MT and/or operations corresponding to the operations of the repeater-MT.

**[First exemplary embodiment] Methods for improving single beam operations of repeater**

The first exemplary embodiment provides prioritization methods for a single beam to overcome the limitations of single beam operations on the access link of NCR.

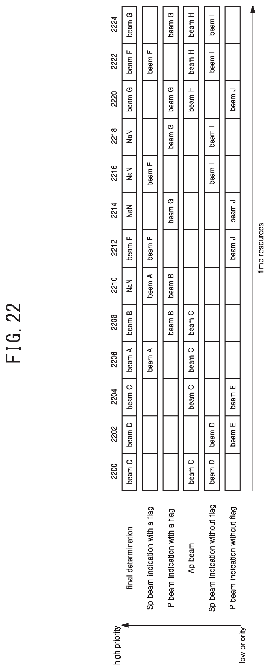

FIG. 22 is a conceptual diagram illustrating exemplary embodiments of a prioritization method for a single beam. In FIG. 22, 'flag' may mean the priority flag.

Referring to FIG. 22, at 2200 and 2204, if either an Sp beam indication or P beam indication not associated with the priority flag overlaps with an Ap beam indication indicating another beam, the NCR may determine a beam (e.g., beam C indicated by a resource set associated with the Ap beam indication) based on the Ap beam indication to support the access link. At 2202, an Sp beam indication and a P beam indication may overlap, the Sp beam indication and the P beam indication may not be associated with the priority flag, and the Sp beam indication and the P beam indication may indicate different beams. In this case, the NCR may determine a beam (e.g., beam D) according to the Sp beam indication to support the access link. In other words, the NCR may communicate with the terminal using the beam D indicated by a resource set associated with the Sp beam indication.

At 2206 and 2208, if either an Sp beam indication or P beam indication associated with the priority flag overlaps with an Ap beam indication indicating another beam, the NCR may determine a beam (e.g., beam A or beam B) based on the Sp beam indication or P beam indication to support the access link. At 2212, if an Sp beam indication associated with the priority flag and a P beam indication not associated with the priority flag overlap, the NCR may determine a beam (e.g., beam F) based on the Sp beam indication associated with the priority flag to support the access link. In other words, the priority of the Sp beam indication may be higher than that of the P beam indication, and the priority of the beam indication associated with the priority flag may be higher than the priority of the beam indication not associated with the priority flag. The NCR may select the Sp beam indication associated with the priority flag by considering the beam indication priorities.

At 2210, 2214, 2216, and 2218, the priorities by beam types may not match the priorities by the priority flag. In this case, it may be difficult to select one beam indication among a plurality of beam indications. At 2210, an Sp beam indication and a P beam indication may overlap, the Sp beam indication and the P beam indication may be associated with the priority flag, and the Sp beam indication and the P beam indication may indicate different beams. In this case, ambiguity may occur in interpretation of the beam indications due to the presence of the priority flag, and the NCR may not be able to determine a beam to support the access link.

At 2218, a P beam indication and an Sp beam indication may overlap, the P beam indication may be associated with the priority flag, the Sp beam indication may not be associated with the priority flag, and the P beam indication and the Sp beam indication may indicate different beams. In this case, ambiguity may occur in prioritization, and the NCR may not be able to determine a beam to support the access link. At 2214, a P beam indication associated with the priority flag and a P beam indication not associated with the priority flag may overlap. Ambiguity may occur due to a rule that beam indications of the same type do not overlap, and the NCR may not be able to determine a beam to support the access link. At 2216, an Sp beam indication associated with the priority flag and an Sp beam indication not associated with the priority flag may overlap. Ambiguity may occur due to a rule that beam indications of the same type do not overlap, and the NCR may not be able to determine a beam to support the access link.

In order to resolve the above-described ambiguity on prioritization, the base station may intend for three or more beam indications to collide in the time resource where the beam indications (e.g., resource sets with which the beam indications are associated) overlap at the NCR (e.g., repeater-MT). For example, the base station may allocate a P beam indication associated with the priority flag, an Ap beam indication, and a P beam indication not associated with the priority flag to the NCR (e.g., repeater-MT) in a specific time resource. The above-described allocation operation of the beam indications may be an operation of additionally allocating the Ap beam indication to resolve the ambiguity in 2214. In this case (e.g., in the case of 2200), the NCR may select the Ap beam indication with a higher priority among the Ap beam indication and the P beam indication not associated with the priority flag, and then select the P beam indication associated with the priority flag among the Ap beam indication and the P beam indication associated with the priority flag. The NCR may finally determine a beam to support the access link based on the P beam indication associated with the priority flag, and may communicate with the terminal using the determined beam.

The base station may allocate an Sp beam indication associated with the priority flag, an Ap beam indication, and an Sp beam indication not associated with the priority flag to the NCR (e.g., repeater-MT) in a specific time resource. The above-described allocation operation of the beam indications may be an operation of additionally allocating the Ap beam indication to resolve the ambiguity at 2216. In this case (e.g., in the case of 2222), the NCR may select the Ap beam indication with a higher priority among the Ap beam indication and the Sp beam indication not associated with the priority flag, and then select the Sp beam indication associated with the priority flag which has a higher priority among the Ap beam indication and the Sp beam indication associated with the priority flag. The NCR may finally determine a beam to support the access link based on the Sp beam indication associated with the priority flag, and may communicate with the terminal using the determined beam.

The base station may allocate a P beam indication associated with the priority flag, an Ap beam indication, and an Sp beam indication not associated with the priority flag to the NCR (e.g., repeater-MT) in a specific time resource. The above-described allocation operation of the beam indications may be an operation of additionally allocating the Ap beam indication to resolve the ambiguity at 2218. In this case (e.g., in the case of 2224), the NCR may select the Ap beam indication with a higher priority among the Ap beam indication and the Sp beam indication not associated with the priority flag, and then select the P beam indication associated with the priority flag which has a higher priority among the Ap beam indication and the P beam indication associated with the priority flag. The NCR may finally determine a beam to support the access link based on the P beam indication associated with a priority flag, and may communicate with the terminal using the determined beam.

The base station and/or NCR may resolve ambiguity in beam indications for the access link and improve efficiency of beam indication by using at least one of the above methods.

**[Second exemplary embodiment] Methods for supporting multi-beam operations of repeater**

Considering the implementation feasibility of the repeater and/or the deployment environments of the repeater, methods of performing multi-beam operations of the repeater will be described. The repeater may simultaneously support multiple users (e.g., multiple terminals) located in different directions. The repeater may be connected to multiple base stations through a non-ideal backhaul with a finite latency, and may receive individual indications from the multiple base stations, respectively. The repeater may perform CA operations and/or DC operations to support multi-carrier operations, multi-band operations, and/or multi-RAT operations. In the above situation, the repeater may perform multi-beam operations supporting one or more beams (e.g., one or more access link beams) simultaneously in the same time resource. The access link beam may refer to a beam used for communication on the access link.

**Methods for indicating multiple P beams**

At least one of methods below may be applied to periodic indication for multi-beam operations. The periodic indication for multi-beam operations may be referred to as 'mP beam indication'.

- Method P1: In P beam indication (e.g., P beam indication for single-beam operations), a beam index and a time resource index (e.g., slot index, symbol index) may have a one-to-one (1-to-1) mapping relationship. The one-to-one mapping relationship may be extended to a many-to-one (N-to-1) mapping relationship for mP beam indication. According to an mP beam indication, multiple beams may be mapped to one time resource. N may be 1 or more. N may be reported through an NCR capability reporting (e.g., NCR UE reporting) procedure. N may be defined based on the maximum number of beams (e.g., access link beams) that the NCR can support simultaneously. N may be set to a value reported by the NCR capability reporting procedure. The base station may determine (e.g., set) N as one of the values reported by the NCR capability reporting procedure.

- Method P2: The base station may allocate M P beam indications (e.g., P beam indications for single beam operations) to the NCR (e.g., repeater-MT). The NCR may select N beams with low (e.g., the lowest) beam indexes among beams according to the M P beam indications allocated by the base station in a time resource (e.g., the same time resource), and determine beams (e.g., access link beams) based on the selected N beams. Alternatively, the N beams may be beams with high (e.g., the highest) beam indexes. Alternatively, the N beams may be beams with recent (e.g., the most recent) beam indexes. N may be 1 or more. N may be reported through an NCR capability reporting (e.g., NCR UE reporting) procedure. N may be defined based on the maximum number of beams (e.g., access link beams) that the NCR can support simultaneously. N may be set to a value reported by the NCR capability reporting procedure. The base station may determine (e.g., set) N as one of the values reported by the NCR capability reporting procedure.

**Methods for indicating multiple Sp beams**

At least one of methods below may be applied for semi-persistent indication for multi-beam operations. The semi-persistent indication for multi-beam operations may be referred to as 'mSp beam indications'.

- Method S1: In Sp beam indication (e.g., Sp beam indication for single-beam operations), a beam index and a time resource index (e.g., slot index, symbol index) may have a one-to-one (1-to-1) mapping relationship. The one-to-one mapping relationship may be extended to a many-to-one (N-to-1) mapping relationship for mSp beam indication. According to an mSp beam indication, multiple beams may be mapped to one time resource. A plurality of beam indexes may be mapped to one beam group index indicated by a MAC CE for mSp beam indication, through RRC configuration. N may be 1 or more. N may be reported through an NCR capability reporting (e.g., NCR UE reporting) procedure. N may be defined based on the maximum number of beams (e.g., access link beams) that the NCR can support simultaneously. N may be set to a value reported by the NCR capability reporting procedure. The base station may determine (e.g., set) N as one of the values reported by the NCR capability reporting procedure.

- Method S2: In Sp beam indication (e.g., Sp beam indication for single-beam operations), a beam index and a time resource index (e.g., slot index, symbol index) may have a one-to-one (1-to-1) mapping relationship. The one-to-one mapping relationship may be extended to a many-to-one (N-to-1) mapping relationship for mSp beam indication. According to an mSp beam indication, multiple beams may be mapped to one time resource. A MAC CE field for mSp beam indication may be extended, and based on the extended MAC CE field, multiple beam indexes may be mapped to one time resource. N may be 1 or more. N may be reported through an NCR capability reporting (e.g., NCR UE reporting) procedure. N may be defined based on the maximum number of beams (e.g., access link beams) that the NCR can support simultaneously. N may be set to a value reported by the NCR capability reporting procedure. The base station may determine (e.g., set) N as one of the values reported by the NCR capability reporting procedure.

- Method S3: The base station may allocate M Sp beam indications (e.g., Sp beam indications for single beam operations) to the NCR (e.g., repeater-MT). The M Sp beam indications may be allocated by a MAC CE. The NCR may select N beams with low (e.g., the lowest) beam indexes among beams according to the M Sp beam indications allocated by the base station in a time resource (e.g., the same time resource), and determine beams (e.g., access link beams) based on the selected N beams. Alternatively, the N beams may be beams with high (e.g., the highest) beam indexes. Alternatively, the N beams may be beams with recent (e.g., the most recent) beam indexes. N may be 1 or more. N may be reported through an NCR capability reporting (e.g., NCR UE reporting) procedure. N may be defined based on the maximum number of beams (e.g., access link beams) that the NCR can support simultaneously. N may be set to a value reported by the NCR capability reporting procedure. The base station may determine (e.g., set) N as one of the values reported by the NCR capability reporting procedure.

**Methods for indicating multiple Ap beams**

At least one of methods below may be applied for aperiodic indication for multi-beam operations. The aperiodic indication for multi-beam operations may be referred to as 'mAp beam indication'.

-    Method A1: In Ap beam indication (e.g., Ap beam indication for single-beam operations), a beam index and a time resource index (e.g., slot index, symbol index) may have a one-to-one (1-to-1) mapping relationship. The one-to-one mapping relationship may be extended to a many-to-one (N-to-1) mapping relationship for mAp beam indication. According to an mAp beam indication, multiple beams may be mapped to one time resource. A plurality of beam indexes may be mapped to one beam group index indicated by DCI for mAP beam indication, through RRC configuration. N may be 1 or more. N may be reported through an NCR capability reporting (e.g., NCR UE reporting) procedure. N may be defined based on the maximum number of beams (e.g., access link beams) that the NCR can support simultaneously. N may be set to a value reported by the NCR capability reporting procedure. The base station may determine (e.g., set) N as one of the values reported by the NCR capability reporting procedure.

-    Method A2: In Ap beam indication (e.g., Ap beam indication for single-beam operations), a beam index and a time resource index (e.g., slot index, symbol index) may have a one-to-one (1-to-1) mapping relationship. The one-to-one mapping relationship may be extended to a many-to-one (N-to-1) mapping relationship for mAp beam indication. According to an mAP beam indication, multiple beams may be mapped to one time resource. A DCI field for mAp beam indication may be extended, and based on the extended DCI field, multiple beam indexes may be mapped to one time resource. N may be 1 or more. N may be reported through an NCR capability reporting (e.g., NCR UE reporting) procedure. N may be defined based on the maximum number of beams (e.g., access link beams) that the NCR can support simultaneously. N may be set to a value reported by the NCR capability reporting procedure. The base station may determine (e.g., set) N as one of the values reported by the NCR capability reporting procedure.

-    Method A3: The base station may allocate M Ap beam indications (e.g., Ap beam indications for single beam operations) to the NCR (e.g., repeater-MT). The M Ap beam indications may be allocated by DCI. The NCR may select N beams with low (e.g., the lowest) beam indexes among beams according to the M Ap beam indications allocated by the base station in a time resource (e.g., the same time resource), and determine beams (e.g., access link beams) based on the selected N beams. Alternatively, the N beams may be beams with high (e.g., the highest) beam indexes. Alternatively, the N beams may be beams with recent (e.g., most recent) beam indexes. N may be 1 or more. N may be reported through an NCR capability reporting (e.g., NCR UE reporting) procedure. N may be defined based on the maximum number of beams (e.g., access link beams) that the NCR can support simultaneously. N may be set to a value reported by the NCR capability reporting procedure. The base station may determine (e.g., set) N as one of the values reported by the NCR capability reporting procedure.

The base station and/or repeater may map one or more beams (e.g., access link beams) to one time resource (e.g., the same time resource) based on at least one of Method P1, Method P2, Method S1, Method S2, Method S3, Method A1, Method A2, or Method A3, and perform multi-beam operations using the mapped beam(s).

**Power allocation method for multiple beams**

The base station and/or NCR (e.g., repeater) may perform multi-beam operations based on at least one of the mAP beam indication, mSp beam indication, or mP beam indication. In multi-beam operations, the base station and/or NCR may determine a transmission power (e.g., downlink transmission power and/or uplink reception sensitivity/gain) for a beam (e.g., access link beam) based on at least one of methods below. The method(s) below may be applied for control (e.g., adjustment) of the downlink transmission power as well as control (e.g., adjustment) of the uplink reception sensitivity/gain.

-    Method T1: For a repeater (e.g., NCR) supporting multi-beam operations, the maximum power (e.g., gain) supported by the repeater for each beam on the access link may be specified (e.g., configured). The maximum output (e.g., gain) of the repeater may be determined based on a class or type of the repeater. Alternatively, the maximum output (e.g., gain) of the repeater may be a value determined in a manner similar to $P_{CMAX}(i)$ in Equation 5. Alternatively, the maximum output (e.g., gain) of the repeater may be a separate value that the repeater reports to the base station.

-    Method T2: For a repeater (e.g., NCR) supporting multi-beam operations, the maximum output (e.g., gain) of the repeater may be specified (e.g., configured) to be distributed equally across the indicated beams. The maximum output (e.g., gain) of the repeater may be determined based on a class or type of the repeater. Alternatively, the maximum output (e.g., gain) of the repeater may be a value determined in a manner similar to $P_{CMAX}(i)$ in Equation 5. Alternatively, the maximum output (e.g., gain) of the repeater may be a separate value that the repeater reports to the base station.

- Method T3: For a repeater (e.g., NCR) supporting multi-beam operations, the base station may set (e.g., allocate) a power (e.g., gain) allocated to each of the indicated beams. It may be ensured that each set power (e.g., gain) or a total sum of the set powers (e.g., gains) does not exceed the maximum output (e.g., gain) of the repeater. If each set power (e.g., gain) or the total sum of the set powers (e.g., gains) exceeds the maximum output (e.g., gain) of the repeater, the repeater may not perform transmission using a power (e.g., gain) exceeding the maximum output (e.g., gain). The maximum output (e.g., gain) of the repeater may be determined based on a class or type of the repeater. Alternatively, the maximum output (e.g., gain) of the repeater may be a value determined in a manner similar to $P_{cuax}(i)$ in Equation 5. Alternatively, the maximum output (e.g., gain) of the repeater may be a separate value that the repeater reports to the base station.

- Method T4: For a repeater (e.g., NCR) supporting multi-beam operations, the repeater may report information on a power (e.g., gain) to be allocated to each of the indicated beams to the base station. The power (e.g., gain) reported to the base station may be a power (e.g., gain) desired by the repeater or an actual power (e.g., gain) used for transmission. The base station may configure (e.g., allocate) a power (e.g., gain) for each of the beams based on the power (e.g., gain) reported by the repeater. It may be ensured that each set power (e.g., gain) or a total sum of the set powers (e.g., gains) does not exceed the maximum output (e.g., gain) of the repeater. If each set power (e.g., gain) or the total sum of the set powers (e.g., gains) exceeds the maximum output (e.g., gain) of the repeater, the repeater may not perform transmission using a power (e.g., gain) exceeding the maximum output (e.g., gain). The maximum output (e.g., gain) of the repeater may be determined based on a class or type of the repeater. Alternatively, the maximum output (e.g., gain) of the repeater may be a value determined in a manner similar to $P_{CMAX}(i)$ in Equation 5. Alternatively, the maximum output (e.g., gain) of the repeater may be a separate value that the repeater reports to the base station.

- Method T5: For a repeater (e.g., NCR) supporting multi-beam operations, the repeater may report information on the maximum number of indicatable beams and/or the maximum number of indicatable beam groups to the base station. The maximum number of beams and/or the maximum number of beam groups reported to the base station may be a number desired by the repeater or the actual number used for transmission. The base station may allocate beam(s) to one time resource based on the maximum number of beams reported by the repeater. The number of beam(s) allocated to one time resource may be less than the maximum number of beams. The base station may allocate beam group(s) to one time resource based on the maximum number of beam groups reported by the repeater. The number of beam group(s) allocated to one time resource may be less than or equal to the maximum number of beam groups. A transmission power for each of the beams or beam groups may be determined based on at least one of Method T1, Method T2, Method T3, or Method T4.

The base station and/or repeater may determine a transmission power/gain (e.g., downlink transmission power, uplink reception sensitivity/gain, etc.) for one or more beams (e.g., access link beams) mapped to one time resource (e.g., the same time resource) based on at least one of Method T1, Method T2, Method T3, Method T4, or Method T5.

**Prioritization method 1 for multiple beams**

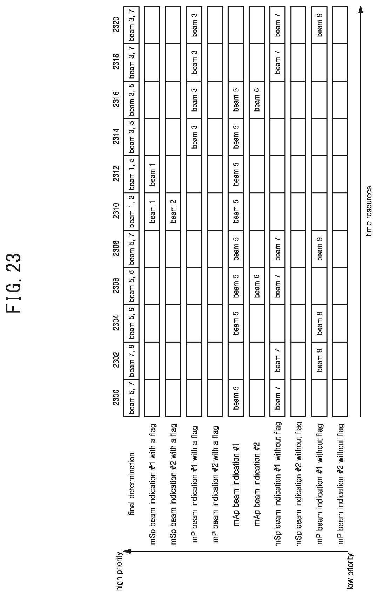

FIG. 23 is a conceptual diagram illustrating exemplary embodiments of a prioritization method for multiple beams. In FIG. 23, 'flag' may mean the priority flag.

Referring to FIG. 23, at 2300 and 2304, if either mSp beam indication or an mP beam indication not associated with the priority flag overlaps with an mAp beam indication indicating another beam, the NCR supporting multi-beam operation may apply both of the beam indications to support the access link. If the number of beams according to overlapping beam indications is less than or equal to the maximum number of access link beams that NCR can support, the above-described operations (e.g., operations according to 2300 and 2304) may be supported. The above-described operation may be applied to a scenario where three or more overlapping beams exist. The NCR (e.g., repeater-MT) may count the number of overlapping beams. If different beam indications indicate the same beam index, the NCR may assume that one beam is indicated.

At 2302, an mSp beam indication and an mP beam indication may overlap, the mSp beam indication and the mP beam indication may not be associated with the priority flag, and the mSp beam indication and the mP beam indication may indicate different beams. In this case, the NCR may apply both beam indications to support the access link. If the number of beams according to overlapping beam indications is less than or equal to the maximum number of access beams that NCR can support, the above-described operations (e.g., operations according to 2302) may be supported. The above-described operations may be applied to a scenario where three or more overlapping beams exist.

At 2306, up to two beams may be used simultaneously for the access link, and an mSp beam indication not associated with the priority flag may overlap with two mAp beam indications indicating different beams. In this case, the NCR supporting multi-beam operations may apply the two mAp beam indications to support the access link. At 2308, up to two beams may be used simultaneously for the access link, and an mSp beam indication not associated with the priority flag and an mP beam indication not associated with the priority flag may overlap with an mAp beam indication indicating another beam. In this case, the NCR supporting multi-beam operations may apply the mAP beam indication and mSp beam indication based on priorities 'Ap > Sp > P' to support the access link.

At 2312 and 23214, an mSp beam indication or mP beam indication may be associated with the priority flag, and the mSp beam indication or mP beam indication may overlap with an mAp beam indication indicating another beam. In this case, the NCR supporting multi-beam operations may apply the two beam indications to support the access link, and may communicate with the terminal based on the two beam indications. At 2310, up to two beams may be used simultaneously for the access link, and two mSp beam indications associated with the priority flag may overlap with one or more mAp beam indications indicating different beams. In this case, the NCR supporting multi-beam operations may apply the two mSp beam indications to support the access link and may ignore the mAp beam indication.

At 2316, up to two beams may be used simultaneously for the access link, and one mP beam indication associated with the priority flag may overlap with two mAp beam indications indicating different beams. In this case, the NCR supporting multi-beam operations may apply the mP beam indication and an mAp beam indication having a low beam index (or high beam index, low beam indication/configuration index, high beam indication/configuration index, and most recent beam index) to support the access link.

At 2318, an mP beam indication associated with the priority flag may overlap with an mSp beam indication not associated with the priority flag. In this case, the NCR supporting multi-beam operations may apply the two beam indications to support the access link. In other words, the NCR may communicate with the terminal based on the two beam indications. At 2320, up to two beams may be used simultaneously for the access link, one mP beam indication associated with the priority flag, one mSp beam indication not associated with the priority flag, and one mP beam indication not associated with the priority flag may overlap. In this case, the NCR supporting multi-beam operations may apply the mP beam indication associated with the priority flag and the mSp beam indication to support the access link. In other words, the NCR may additionally apply the mSp beam indication with a higher priority among one mSp beam indication not associated with the priority flag and one mP beam indication not associated with the priority flag.

The above-described exemplary embodiments may be appropriately modified, and the modified exemplary embodiments may be used. If three or more beams can be used simultaneously for the access link, two or more of the above-described exemplary embodiments may be applied sequentially, and beams for multi-beam operations (e.g., access link beams) may be determined based on the two or more exemplary embodiments.

The base station and/or NCR may resolve ambiguity regarding beam indications based on at least one of the above-described exemplary embodiments (e.g., methods described above), and the efficiency of beam indications can be improved.

**Prioritization method 2 for multiple beams**

A collision between multi-beam indications (e.g., mP beam indication, mSp beam indication, and/or mAp beam indication) may occur. A collision between a multi-beam indication and a single beam indication (e.g., P beam indication, Sp beam indication, and/or Ap beam indication) may occur. The NCR may be connected to two different base stations and may receive beam indications (e.g., resource sets associated with beams) from the two different base stations, respectively. Among the two different base stations, a first base station may support single beam operations. In other words, the first base station may transmit single beam indication(s) to the NCR. Among the two different base stations, a second base station may support multi-beam operations. In other words, the second base station may transmit multi-beam indication(s) to the NCR.

The NCR may be connected to two different base stations based on DC operations. The two different base stations may be connected via a non-ideal backhaul. The two different base stations may include a first base station and a second base station. The first base station may not be aware of beam operations (e.g., single beam operations or multi-beam operations) supported by the second base station, and the second base station may not be aware of beam operations (e.g., single beam operations or multi-beam operations) supported by the first base station. In other words, the base station may not be able to obtain real-time information on the type of beam indication (e.g., single beam indication or multi-beam indication) of the other base station. As another example, each of the two different base stations may perform multi-beam operations based on single beam indications.

In the above-described situation, the NCR (e.g., repeater-MT) may determine priorities of beam indications based on at least one of methods below to resolve a collision between the beam indications.

- Method M1: A single beam indication may be configured to have a higher or lower priority than a multi-beam indication. If a single beam indication and a multi-beam indication collide, the NCR (e.g., repeater-MT) may determine a beam indication to apply based on the priorities, and appropriately select a beam to use on the access link based on the determined beam indication.

- Method M2: The NCR may have the multi-PA structure shown in FIG. 21, and may report, to the base station, that the NCR has the multi-PA structure through an NCR capability reporting procedure (e.g., repeater-MT capability reporting procedure) or UE capability reporting procedure. In this case, a single beam indication may override an indication for one beam among beams according to a multi-beam indication. The one beam to be overridden may be a beam with the lowest index or the highest index among the beams according to the multi-beam indication. The NCR capability report (e.g., repeater-MT capability report) or UE capability report may include a DC-related capability report or multi-panel-related capability report, and information included in the DC-related capability report or multi-panel-related capability report may implicitly indicate that the NCR has the multi-PA structure.

- Method M3: The NCR may have the single PA structure shown in FIG. 20 or the multi-PA structure shown in FIG. 21. In multi-beam operations, an output of one PA may be shared by multiple beams. In this case, a single beam indication may override an indication for one beam among beams according to a multi-beam indication. The one beam to be overridden may be a beam to which the highest power is allocated among the beams according to the multi-beam indication. The above-described operation may be performed to reliably operate a beam corresponding to the single beam operations.

- Method M4: NCR may have the single PA structure shown in FIG. 20 or the multi-PA structure shown in FIG. 21. In multi-beam operations, an output of one PA may be shared by multiple beams. In this case, a single beam indication may override an indication for one beam among beams according to a multi-beam indication. The one beam to be overridden may be a beam similar (e.g., the most similar) to a beam according to the single beam indication among the beams according to the multi-beam indication. The above-described operation may be performed to minimize a performance loss of the multi-beam operations due to the overriding operation. The similar beam may mean a beam with the most similar boresight direction. The similar beam may mean the most similar beam in terms of a beam width (e.g., 3dB half power beamwidth (HPBW)). The similar beam may mean the most similar beam in terms of a sidelobe leakage power. The similar beam may mean one beam among beams configured as similar beams by the base station. The similar beams may be defined for NCR operations, and the similar beams may be reported to an operator or base station through signaling such as Operations, Administration and Maintenance (OAM) signaling. In other words, the similar beams may mean beams reported as similar beams to the operator or base station.

**Methods for improving priority flag**

A priority flag for a P beam indication or Sp beam indication having a plurality of {beam index, time resource index} pairs may be provided. The plurality of {beam index, time resource index} pairs may be controlled by one priority flag. The priority flag may be included in beam indication configuration information in form of Table 21 below. The base station may transmit the beam indication configuration information (or beam indication configuration group information) to communication node(s) (e.g., NCR, terminal). The beam indication configuration information may include P beam indication configuration, Sp beam indication configuration, and/or Ap beam indication configuration.

[Table 21]

| Priority flag |
|---|
| Configured |
| Not configured |

To complement the prioritization method for multiple beams, Table 21 may be expanded as Table 22 below. In Table 22, a priority flag may be configured as 2 bits or more. A codeword (e.g., 00) may indicate that the priority flag is not configured. Another codeword (e.g., 01) may mean that the priority flag is applied to multi-beam operations, and multi-beam operations have a lower priority than single beam operations. Another codeword (e.g., 10) may mean that the priority flag is applied to multi-beam operations, and multi-beam operations have a higher priority than single beam operations.

[Table 22]

| Priority flag | Description |
|---|---|
| 00 | Not configured |
| 01 | The priority flag is applied to multi-beam operations, and multi-beam operations have a lower priority than single beam operations |
| 10 | The priority flag is applied to multi-beam operations, and multi-beam operations have a higher priority than single beam operations |
| 11 | Reserved |

To complement the prioritization method for multiple beams, Table 21 may be expanded as Table 23 below. In Table 23, a priority flag may be configured as 2 bits or more. A codeword (e.g., 00) may indicate that the priority flag is not configured. Another codeword (e.g., 01) may mean that the priority flag is applied to multi-beam operations, and various types of beam indications (e.g., P beam indication, Sp beam indication, and/or Ap beam indication) are applicable to the multi-beam operations. Another codeword (e.g., 10) may mean that the priority flag is applied to multi-beam operations, and the same type of beam indications (e.g., P beam indication, Sp beam indication, or Ap beam indication) are applicable to the multi-beam operations.

[Table 23]

| Priority flag | Description |
|---|---|
| 00 | Not configured |
| 01 | The priority flag is applied to multi-beam operations, and various types of beam indications are applicable to the multi-beam operations |
| 10 | The priority flag is applied to multi-beam operations, and the same type of beam indications are applicable to the multi-beam operations. |
| 11 | Reserved |

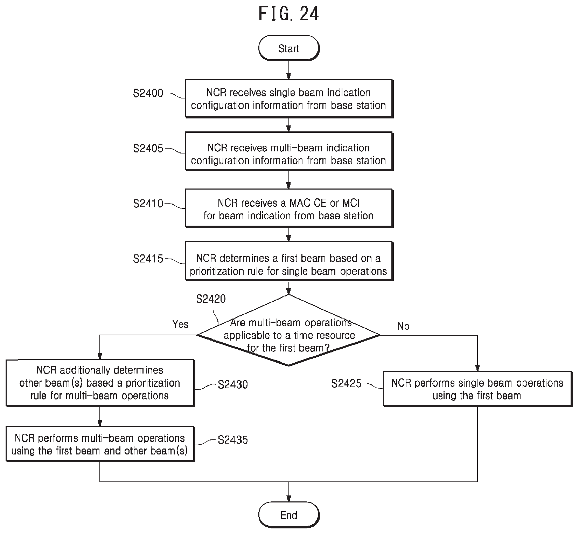

FIG. 24 is a flowchart illustrating a method of performing single beam operations or multi-beam operations based on priorities.

Referring to FIG. 24, a base station may transmit beam indication configuration information for single beam operations through signaling. The NCR (e.g., NCR-MT, repeater-MT) may receive the beam indication configuration information for single beam operations from the base station (S2400). The beam indication configuration information (e.g., single beam indication configuration information) may include configuration information for P beam indication, Sp beam indication, and/or Ap beam indication. A beam indication may be associated with the priority flag. Alternatively, a beam indication may not be associated with the priority flag. The beam direction configuration information may mean resource set configuration information.

The base station may transmit beam indication configuration information for multi-beam operations through signaling. The NCR (e.g., NCR-MT, repeater-MT) may receive the beam indication configuration information for multi-beam operations from the base station (S2405). The beam indication configuration information (e.g., multi-beam indication configuration information) may include configuration information for mP beam indication, mSp beam indication, and/or mAp beam indication. A beam indication may be associated with the priority flag. Alternatively, a beam indication may not be associated with the priority flag. The priority flag associated with the mP beam indication, mSp beam indication, and/or mAp beam indication may be configured as Table 21, Table 22, or Table 23.

Steps S2400 and S2405 may be performed in various orders. For example, step S2400 may be performed before step S2405. Alternatively, steps S2400 and S2405 may be performed simultaneously. Alternatively, step S2405 may be performed before step S2400.

In step S2410, the base station may transmit a MAC CE for Sp beam indication or mSp beam indication and/or a DCI for Ap beam indication or mAp beam indication to the NCR, and the NCR may receive the MAC CE for Sp beam indication or mSp beam indication and/or the DCI for Ap beam indication or mAp beam indication from the base station. The MAC CE and/or DCI may indicate at least one beam indication among the beam indications configured in step S2400 and/or S2405. In other words, the MAC CE and/or DCI may enable (e.g., activate) at least one beam indication among the beam indications configured in steps S2400 and/or S2405.

The NCR may determine a first beam for the access link based on at least one of the prioritization methods (e.g., prioritization rules) for single beam operations according to the first exemplary embodiment described above (S2415). The NCR may identify whether application of multi-beam operations is indicated in a time resource to which the first beam is applied (S2420). In other words, the NCR may check whether multi-beam operations are applicable in the time resource to which the first beam is applied.

If multi-beam operations are not applied to the time resource to which the first beam is applied, the NCR may operate the access link by applying the first beam for single beam operations (S2425). In other words, the NCR may perform single beam operations using the first beam. The NCR may transmit signals and/or channels to the terminal using the first beam. The operating of the access link may mean that the NCR amplifies a signal received through the backhaul link and transmits the amplified signal through the access link. The operating of the access link may mean that the NCR retransmits, through the access link, a signal received through the backhaul link.

If multi-beam operations are applied to the time resource to which the first beam is applied, the NCR may additionally determine beam(s) for multi-beam operations based on at least one of the above-described prioritization method for multi-beam operations according to the second exemplary embodiment (S2430). The NCR may operate the access link using the first beam and the additionally determined beam(s) (S2435). In other words, the NCR may perform multi-beam operations using the first beam and the additionally determined beam(s). The NCR may transmit signals and/or channels to the terminal using the first beam and additionally determined beam(s). If single beam operations are not applied to a certain time resource (e.g., there is no single beam indication corresponding to the certain time resource), steps S2415 and S2425 may be omitted.

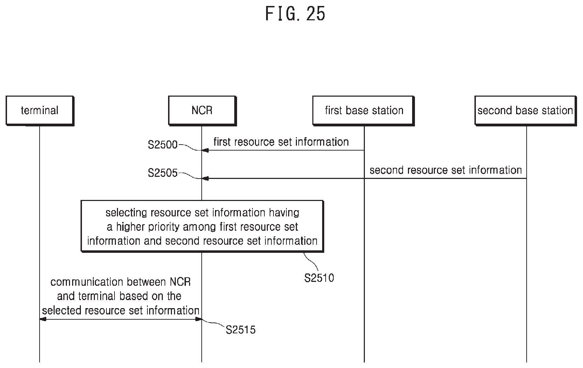

FIG. 25 is a sequence chart illustrating a method of performing single beam operations or multi-beam operations based on priorities.

Referring to FIG. 25, in step S2500, a first base station may transmit first resource set information associated with a first beam to the NCR (e.g., NCR-MT, repeater-MT) through signaling, and the NCR may receive the first resource set information associated with the first beam from the first base station. The first resource set information may include one or more {beam, time resource} pairs. {beam, time resource} may be interpreted as {beam index, time resource index}. One beam may be mapped to one time resource. Alternatively, multiple beams may be mapped to one time resource. The time resource may be a periodic, aperiodic, or semi-persistent resource.

In step S2505, a second base station may transmit second resource set information associated with a second beam to the NCR through signaling, and the NCR may receive the second resource set information associated with the second beam from the second base station. The second resource set information may include one or more {beam, time resource} pairs. {beam, time resource} may be interpreted as {beam index, time resource index}. One beam may be mapped to one time resource. Alternatively, multiple beams may be mapped to one time resource. The time resource may be a periodic, aperiodic, or semi-persistent resource. The signaling may include at least one of system information (SI) signaling, RRC signaling, MAC CE signaling, or PHY signaling (e.g., DCI signaling). The first base station and the second base station may be the same base station. Alternatively, the first base station and the second base station may be different base stations.

Each of the first resource set information and the second resource set information may mean a beam indication (e.g., single beam indication configuration, multi-beam indication configuration, single beam indication configuration information, multi-beam indication configuration information). For example, each of the first resource set information and the second resource set information may mean at least one of an Ap beam indication, an mAp beam indication, an Sp beam indication, an mSp beam indication, a P beam indication, or an mP beam indication. Each of the first resource set information and the second resource set information may include single beam information, multi-beam information, time resource information, etc. The first resource set information may include a single beam indication or a multi-beam indication including the first beam. The second resource set information may include a single beam indication or a multi-beam indication including the second beam.

Each of the first resource set information and the second resource set information may indicate at least one of a semi-persistent resource (e.g., sP resource), a periodic resource (e.g., P resource), or an aperiodic resource (e.g., aP resource). The resource indicated by each of the first resource set information and the second resource set information may be a resource on the access link between the NCR and the terminal.

Resource set information (e.g., first resource set information and/or or second resource set information) indicating a semi-persistent resource (e.g., Sp beam indication, mSp beam indication) or a period resource (e.g., P beam indication, mP beam indication) may be included in an RRC message transmitted by the base station. In other words, resource set information on a semi-persistent resource or periodic resource may be transmitted through RRC signaling. Resource set information (e.g., first resource set information and/or second resource set information) indicating an aperiodic resource (e.g., Ap beam indication, mAp beam indication) may be included in DCI transmitted by the base station. In other words, resource set information on an aperiodic resource may be transmitted through DCI signaling.

The use of resource (e.g., application of a beam) indicated by each of the first resource set information and the second resource set information may be indicated by a MAC CE. In other words, the base station may transmit a MAC CE indicating to use the resource (e.g., application of a beam) indicated by the first resource set information and/or the second resource set information to the NCR. The NCR may determine that the resource (e.g., beam) indicated by the MAC CE received from the base station is available. The MAC CE may indicate activation (e.g., enable) of the resource (e.g., beam).

The NCR may identify a first time resource indicated by the first resource set information and a second time resource indicated by the second resource set information. If the first time resource indicated by the first resource set information overlaps (e.g., partially overlaps or fully overlaps) the second time resource indicated by the second resource set information, the NCR may select one resource set information with a higher priority among the first resource set information and the second resource set information (S2510). The priority may be the priority in the single beam operations according to the first exemplary embodiment described above and/or the priority in the multi-beam operations according to the second exemplary embodiment described above.

The NCR may determine that resource set information indicating an aperiodic resource (e.g., Ap beam, mAp beam, aperiodic time resource) among the first resource set information and the second resource set information has a higher priority. The NCR may determine that resource set information indicating a semi-persistent resource (e.g., Sp beam, mSp beam, semi-persistent time resource) has a higher priority among the first resource set information and the second resource set information. The NCR may determine that one resource set information with the priority flag has a higher priority among the first resource set information and the second resource set information. The NCR may determine that resource set information associated with a low beam index or a high beam index has a higher priority among the first resource set information and the second resource set information. The NCR may determine that resource set information with a single beam indication or a multi-beam indication has a higher priority among the first resource set information and the second resource set information.

The NCR may communicate with the terminal using a single beam or multiple beams associated with the resource set information selected in S2510 in the resource indicated by the resource set information (S2515).

Meanwhile, the NCR (e.g., repeater) may perform operations according to various combinations of the above-described exemplary embodiments. The NCR may report function(s) that the NCR can support and/or function(s) that the NCR cannot support to the base station through signaling. The base station may determine operation(s) to be performed by the NCR based on the information received from the NCR, and may indicate information on the determined operation(s) to the NCR through signaling. The NCR may perform the operation(s) indicated by the base station.

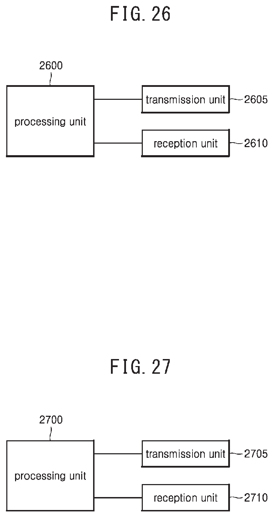

FIG. 26 is a block diagram illustrating exemplary embodiments of a base station.

Referring to FIG. 26, a base station may include a processing unit 2600, a transmission unit 2605, and a reception unit 2610. Each component of the base station may be subdivided. Alternatively, some of the components of the base station may be integrated into one component. The processing unit 2600 may determine the overall operations of the base station and process the operations. For the above-described operation, the processing unit 2600 may store information and procedures, control the transmission unit 2605 to properly transmit signals, and control the reception unit 2610 to properly receive signals. The processing unit 2600 may determine which method(s) to use among the methods of the above-described exemplary embodiments, and may indicate the determined method(s) to the repeater.

FIG. 27 is a block diagram illustrating exemplary embodiments of a repeater.

Referring to FIG. 27, a repeater may include a processing unit 2700, a transmission unit 2705, and a reception unit 2710. Each component of the repeater may be subdivided. Alternatively, some of the components of the repeater may be integrated into one component. The processing unit 2700 may determine the overall operations of the repeater and process the operations. For the above-described operation, the processing unit 2700 may store information and procedures, control the transmission unit 2705 to properly transmit signals, and control the reception unit 2710 to properly receive signals.

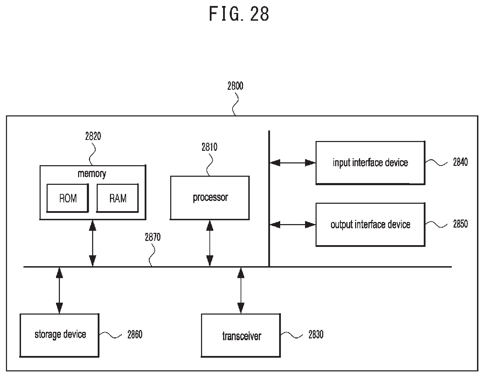

FIG. 28 is a block diagram illustrating exemplary embodiments of a communication node.

Referring to FIG. 28, a communication node 2800 may include at least one of at least one processor 2810, a memory 2820, or a transceiver device 2830 that is connected to a network and performs communication. Additionally, the communication node 2800 may further include an input interface device 2840, an output interface device 2850, a storage device 2860, and/or the like. The respective components included in the communication node 2800 may perform communication with each other as being connected through a bus 2870.

However, each component included in the communication node 2800 may be connected through an individual interface or individual bus centered on the processor 2810, rather than the common bus 2870. For example, the processor 2810 may be connected to at least one of the memory 2820, the transceiver device 2830, the input interface device 2840, the output interface device 2850, and the storage device 2860 through dedicated interface(s).

The processor 2810 may execute program commands stored in at least one of the memory 2820 and the storage device 2860. The processor 2810 may refer to a central processing unit (CPU), a graphics processing unit (GPU), or a dedicated processor on which the methods according to the exemplary embodiments of the present disclosure are performed. Each of the memory 2820 and the storage device 2860 may be comprised of at least one of a volatile storage medium and a non-volatile storage medium. For example, the memory 2820 may be comprised of at least one of read only memory (ROM) and random access memory (RAM).

The operations of the method according to the exemplary embodiment of the present disclosure can be implemented as a computer readable program or code in a computer readable recording medium. The computer readable recording medium may include all kinds of recording apparatus for storing data which can be read by a computer system. Furthermore, the computer readable recording medium may store and execute programs or codes which can be distributed in computer systems connected through a network and read through computers in a distributed manner.

The computer readable recording medium may include a hardware apparatus which is specifically configured to store and execute a program command, such as a ROM, RAM or flash memory. The program command may include not only machine language codes created by a compiler, but also high-level language codes which can be executed by a computer using an interpreter.

Although some aspects of the present disclosure have been described in the context of the apparatus, the aspects may indicate the corresponding descriptions according to the method, and the blocks or apparatus may correspond to the steps of the method or the features of the steps. Similarly, the aspects described in the context of the method may be expressed as the features of the corresponding blocks or items or the corresponding apparatus. Some or all of the steps of the method may be executed by (or using) a hardware apparatus such as a microprocessor, a programmable computer or an electronic circuit. In some embodiments, one or more of the most important steps of the method may be executed by such an apparatus.

In some exemplary embodiments, a programmable logic device such as a field-programmable gate array may be used to perform some or all of functions of the methods described herein. In some exemplary embodiments, the field-programmable gate array may be operated with a microprocessor to perform one of the methods described herein. In general, the methods are preferably performed by a certain hardware device.

The description of the disclosure is merely exemplary in nature and, thus, variations that do not depart from the substance of the disclosure are intended to be within the scope of the disclosure. Such variations are not to be regarded as a departure from the spirit and scope of the disclosure. Thus, it will be understood by those of ordinary skill in the art that various changes in form and details may be made without departing from the spirit and scope as defined by the following claims.

**Claims**

1. A method of a repeater, comprising:

   receiving, from a first base station, first resource set information associated with a first beam;
   receiving, from a second base station, second resource set information associated with a second beam;
   in response to that a first time resource indicated by the first resource set information overlaps with a second time resource indicated by the second resource set information, selecting one resource set information having a higher priority among the first resource set information and the second resource set information; and
   performing communication with a terminal using one beam associated with the one resource set information in a resource indicated by the one resource set information.

2. The method according to claim 1, wherein each of the first resource set information and the second resource set information indicates a semi-persistent resource, periodic resource, or aperiodic resource.

3. The method according to claim 2, wherein each of the first resource set information and the second resource set information, which indicates the semi-persistent resource or the periodic resource, is included in a radio resource control (RRC) message, and each of the first resource set information and the second resource set information, which indicates the aperiodic resource, is included in downlink control information (DCI).

4. The method according to claim 1, wherein the first resource set information includes a single beam indication or a multi-beam indication including the first beam, and the second resource set information includes a single beam indication or a multi-beam indication including the second beam.

5. The method according to claim 1, wherein use of a resource indicated by each of the first resource set information and the second resource set information is indicated by a medium access control (MAC) control element (CE).

6. The method according to claim 1, wherein the one resource set information indicating an aperiodic resource among the first resource set information and the second resource set information has the higher priority.

7. The method according to claim 1, wherein the one resource set information indicating a semi-persistent resource among the first resource set information and the second resource set information has the higher priority.

8. The method according to claim 1, wherein the one resource set information with a priority flag among the first resource set information and the second resource set information has the higher priority.

9. The method according to claim 1, wherein the one resource set information associated with a low beam index or a high beam index among the first resource set information and the second resource set information has the higher priority.

10. The method according to claim 1, wherein the one resource set information including a single beam indication or a multi-beam indication among the first resource set information and the second resource set information has the higher priority.

11. The method according to claim 1, wherein a resource indicated by each of the first resource set information and the second resource set information is a resource on an access link between the repeater and the terminal.

12. The method according to claim 1, wherein the first base station and the second base station are a same base station or different base stations.

13. A repeater comprising at least one processor, wherein the at least one processor causes the repeater to perform:

receiving, from a first base station, first resource set information associated with a first beam;
receiving, from a second base station, second resource set information associated with a second beam;
in response to that a first time resource indicated by the first resource set information overlaps with a second time resource indicated by the second resource set information, selecting one resource set information having a higher priority among the first resource set information and the second resource set information; and
performing communication with a terminal using one beam associated with the one resource set information in a resource indicated by the one resource set information.

14. The repeater according to claim 13, wherein each of the first resource set information and the second resource set information indicates a semi-persistent resource, periodic resource, or aperiodic resource.

15. The repeater according to claim 13, wherein the first resource set information includes a single beam indication or a multi-beam indication including the first beam, and the second resource set information includes a single beam indication or a multi-beam indication including the second beam.

16. The repeater according to claim 13, wherein the one resource set information indicating an aperiodic resource among the first resource set information and the second resource set information has the higher priority.

17. The repeater according to claim 13, wherein the one resource set information indicating a semi-persistent resource among the first resource set information and the second resource set information has the higher priority.

18. The repeater according to claim 13, wherein the one resource set information with a priority flag among the first resource set information and the second resource set information has the higher priority.

19. The repeater according to claim 13, wherein the one resource set information associated with a low beam index or a high beam index among the first resource set information and the second resource set information has the higher priority.

20. The repeater according to claim 13, wherein the one resource set information including a single beam indication or a multi-beam indication among the first resource set information and the second resource set information has the higher priority.

FIG. 1

<u>100</u>

| | | |
|---|---|---|
| L3 | radio resource control (RRC) layer | ~110 |

logical channel ~115

| | | |
|---|---|---|
| L2 | medium access control (MAC) layer | ~120 |

transport channel ~125

| | | |
|---|---|---|
| L1 | physical (PHY) layer | ~130 |

control/measurement

150

FIG. 2

200

frame ———————————————— 230

slot ——210

| #0 | · · · | #(N$_{slot}^{subframe, \mu}$−1) | · · · | #(N$_{slot}^{frame, \mu}$−1) |

——220

subframe

FIG. 3

| downlink frame #i | —300

| uplink frame #i | —310

——320

T$_{TA}$

## FIG. 4

400

FIG. 5

<u>500</u>

FIG. 6

600

615                                                       610

┌──────┐                                              ┌──────┐
│  UE  │                                              │ gNB  │
└──────┘                                              └──────┘

                    Msg1 : preamble          S620

                    Msg2 : RACH response      S630

                    Msg3: PUSCH              S640

              Msg4: contention resolution    S650

                    HARQ ACK                 S660

FIG. 7

frequency

RO #0        RO #1        RO #2              RO #(N-1)

┌────────┐   ┌────────┐   ┌────────┐         ┌────────┐
│ ┌────┐ │   │ ┌────┐ │   │ ┌────┐ │         │ ┌────┐ │
│ │SSB │ │   │ │SSB │ │   │ │SSB │ │  · · ·  │ │ SSB │ │
│ │ #0 │ │   │ │ #1 │ │   │ │ #2 │ │         │ │#(N-1)│ │
│ └────┘ │   │ └────┘ │   │ └────┘ │         │ └────┘ │
└────────┘   └────────┘   └────────┘         └────────┘

                                                    time

FIG. 8

## FIG. 9

900

910

S930

RRC

| TCI #1 | TCI #2 | TCI #3 | · · · | TCI #M |

S940

MAC CE

| TCI #1 | TCI #2 | · · · | TCI #N |

S950 — DCI

indicated TCI

TCI configuration

reference (e.g. SSB, CSI-RS) — 915

large-scale channel characteristics

target (e.g. CSI-RS, DMRS) — 920

## FIG. 10

| CORESET pool ID | serving cell ID | | | | | BWP ID | | |
|---|---|---|---|---|---|---|---|---|
| $T_7$ | $T_6$ | $T_5$ | $T_4$ | $T_3$ | $T_2$ | $T_1$ | $T_0$ | Oct 2 |
| $T_{15}$ | $T_{14}$ | $T_{13}$ | $T_{12}$ | $T_{11}$ | $T_{10}$ | $T_9$ | $T_8$ | Oct 3 |

Oct 1

. . .

| $T_{(N-2)\times8+7}$ | $T_{(N-2)\times8+6}$ | $T_{(N-2)\times8+5}$ | $T_{(N-2)\times8+4}$ | $T_{(N-2)\times8+3}$ | $T_{(N-2)\times8+2}$ | $T_{(N-2)\times8+1}$ | $T_{(N-2)\times8}$ | Oct N |
|---|---|---|---|---|---|---|---|---|

EP 4 753 166 A1

## FIG. 11

| serving cell ID | | | CORESET ID | Oct 1 |
|---|---|---|---|---|
| CORESET ID | TCI state ID | | | Oct 2 |

FIG. 12

1215 — DL symbol | DL-dedicated slot(1200)

1220 — UL symbol | UL-dedicated slot(1205)

DL symbol | guard period | UL symbol | mixed slot(1210)
1225 | 1230 | 1235

FIG. 13

UE | network

UE capability report request | S1300

UE capability report | S1310

# FIG. 14A

1400

| terminal | | base station |
|---|---|---|
| SDAP | ⟷ | SDAP |
| PDCP | ⟷ | PDCP |
| RLC | ⟷ | RLC |
| MAC | ⟷ | MAC |
| PHY | ⟷ | PHY |

user plane protocol stack

# FIG. 14B

1450

| terminal | | base station | | AMF |
|---|---|---|---|---|
| NAS | | | | NAS |
| RRC | ⟷ | RRC | | |
| PDCP | ⟷ | PDCP | | |
| RLC | ⟷ | RLC | | |
| MAC | ⟷ | MAC | | |
| PHY | ⟷ | PHY | | |

control plane protocol stack

FIG. 15

cell-specific DL/UL configuration

UE-specific DL/UL configuration

DCI indication

1502 DL  1504 FL  1506 UL

1512 DL  1514 FL  1516 UL

1522 DL  1524 UL

time

FIG. 16

FIG. 17

user plane and control plane

| | base station | | | repeater | | | terminal | |
|---|---|---|---|---|---|---|---|---|
| 1706 | RRC | | | | | | RRC | 1726 |
| 1705 | PDCP | | | | | | PDCP | 1725 |
| 1704 | RLC | | | | | | RLC | 1724 |
| 1703 | MAC | | | 1711 | | | MAC | 1723 |
| 1702 | PHY | | | | | | PHY | 1722 |
| 1701 | RF | | | RF | | | RF | 1721 |

FIG. 18

base station(1820)

base station-repeater link
(control link + backhaul link)

first repeater antenna
(1800)

wired

wired

UL signals through
an access link

signal processor
(1850)

second repeater
antenna(1805)

terminal(1810)

repeater
control
signal

repeater-MT(1860)

internal control
interface

first repeater antenna(1800)

repeater-AF unit(1865)

second repeater
antenna(1805)

EP 4 753 166 A1

FIG. 19A

NCR-Fwd (AF unit)

| | |
|---|---|
| 1906 | RRC |
| 1905 | PDCP |
| 1904 | RLC |
| 1903 | MAC |
| 1902 | RHY |
| 1901 | RF |

base station

1911

| |
|---|
| RF |

advanced repeater

| | |
|---|---|
| RRC | 1926 |
| PDCP | 1925 |
| RLC | 1924 |
| MAC | 1923 |
| RHY | 1922 |
| RF | 1921 |

terminal

FIG. 19B

NCR-MT

| | |
|---|---|
| 1936 | RRC |
| 1935 | PDCP |
| 1934 | RLC |
| 1933 | MAC |
| 1932 | RHY |
| 1931 | RF |

base station

| | |
|---|---|
| 1946 | RRC |
| 1945 | PDCP |
| 1944 | RLC |
| 1943 | MAC |
| 1942 | RHY |
| 1941 | RF |

advanced repeater

| | |
|---|---|
| RRC | 1956 |
| PDCP | 1955 |
| RLC | 1954 |
| MAC | 1953 |
| RHY | 1952 |
| RF | 1951 |

terminal

F I G. 20

**FIG. 21**

terminal

composite antenna (repeater antenna #2)

AA (Antenna Array)

RDN (Radio Distribution Network)

RF chain

TX (DL) path(s)

PA$^N_{TX}$ (2105) ... PA$^1_{TX}$ (2100)

PA$^1_{RX}$ (2110) ... PA$^M_{RX}$ (2115)

RX (UL) path(s)

composite antenna (repeater antenna #1)

RDN (Radio Distribution Network)

AA (Antenna Array)

base station

## FIG. 22

high priority ↕ low priority

| | 2200 | 2202 | 2204 | 2206 | 2208 | 2210 | 2212 | 2214 | 2216 | 2218 | 2220 | 2222 | 2224 |
|---|---|---|---|---|---|---|---|---|---|---|---|---|---|
| final determination | beam C | beam D | beam C | beam A | beam B | NaN | beam F | NaN | NaN | NaN | beam G | beam F | beam G |
| Sp beam indication with a flag | | | | beam A | | beam A | beam F | | beam F | | | beam F | |
| P beam indication with a flag | | | | | beam B | beam B | | beam G | | beam G | beam G | | beam G |
| Ap beam | beam C | | beam C | beam C | beam C | | | | | | beam H | beam H | beam I |
| Sp beam indication without flag | | beam D | beam E | | | | | beam J | beam I | beam I | | beam I | beam I |
| P beam indication without flag | | beam E | beam E | | | | beam J | beam J | | | beam J | | |

time resources →

# FIG. 23

| | 2300 | 2302 | 2304 | 2306 | 2308 | 2310 | 2312 | 2314 | 2316 | 2318 | 2320 |
|---|---|---|---|---|---|---|---|---|---|---|---|
| final determination | beam 5, 7 | beam 7, 9 | beam 5, 9 | beam 5, 6 | beam 5, 7 | beam 1, 2 | beam 1, 5 | beam 3, 5 | beam 3, 5 | beam 3, 7 | beam 3, 7 |
| mSp beam indication #1 with a flag | | | | | | beam 1 | beam 1 | | | | |
| mSp beam indication #2 with a flag | | | | | | beam 2 | | | | | |
| mP beam indication #1 with a flag | | | | | | | | beam 3 | beam 3 | beam 3 | beam 3 |
| mP beam indication #2 with a flag | | | | | | | | | | | |
| mAp beam indication #1 | beam 5 | | beam 5 | beam 5 | beam 5 | beam 5 | beam 5 | beam 5 | beam 5 | | |
| mAp beam indication #2 | | | | beam 6 | | | | | beam 6 | | |
| mSp beam indication #1 without flag | beam 7 | beam 7 | | beam 7 | beam 7 | | | | | beam 7 | beam 7 |
| mSp beam indication #2 without flag | | | | | | | | | | | |
| mP beam indication #1 without flag | | beam 9 | beam 9 | | beam 9 | | | | | | beam 9 |
| mP beam indication #2 without flag | | | | | | | | | | | |

high priority ↑  low priority ↓

time resources →

## FIG. 24

```
                          ┌─────────┐
                          │  Start  │
                          └────┬────┘
                               ▼
S2400 ─── ┌──────────────────────────────────────┐
          │ NCR receives single beam indication   │
          │ configuration information from base station │
          └──────────────────┬───────────────────┘
                              ▼
S2405 ─── ┌──────────────────────────────────────┐
          │ NCR receives multi-beam indication    │
          │ configuration information from base station │
          └──────────────────┬───────────────────┘
                              ▼
S2410 ─── ┌──────────────────────────────────────┐
          │ NCR receives a MAC CE or MCI          │
          │ for beam indication from base station │
          └──────────────────┬───────────────────┘
                              ▼
S2415 ─── ┌──────────────────────────────────────┐
          │ NCR determines a first beam based on a │
          │ prioritization rule for single beam operations │
          └──────────────────┬───────────────────┘
                              ▼
                        S2420
          Yes          ◇ Are multi-beam operations          No
      ◄───────────────◇ applicable to a time resource ◇───────────────►
                        ◇   for the first beam?   ◇
```

**Yes branch (S2430):** NCR additionally determines other beam(s) based a prioritization rule for multi-beam operations

**(S2435):** NCR performs multi-beam operations using the first beam and other beam(s)

**No branch (S2425):** NCR performs single beam operations using the first beam

```
                          ┌─────────┐
                          │   End   │
                          └─────────┘
```

# FIG. 25

| terminal | | NCR | | first base station | | second base station |
|----------|---|-----|---|-------------------|---|---------------------|

S2500 —— first resource set information

S2505 —— second resource set information

selecting resource set information having
a higher priority among first resource set
information and second resource set information

S2510

communication between NCR
and terminal based on the
selected resource set information

S2515

FIG. 26

2600

processing unit

transmission unit ─2605

reception unit ─2610

FIG. 27

2700

processing unit

transmission unit ─2705

reception unit ─2710

FIG. 28

## INTERNATIONAL SEARCH REPORT

| International application No. |
|---|
| **PCT/KR2024/010334** |

| | |
|---|---|
| **A.** | **CLASSIFICATION OF SUBJECT MATTER** |

**H04B 7/155**(2006.01)i; **H04B 7/06**(2006.01)i; **H04B 7/0408**(2017.01)i; **H04W 72/044**(2023.01)i; **H04W 72/0446**(2023.01)i; **H04W 72/231**(2023.01)i; **H04W 72/232**(2023.01)i; **H04W 72/56**(2023.01)i; **H04W 84/04**(2009.01)i

According to International Patent Classification (IPC) or to both national classification and IPC

| | |
|---|---|
| **B.** | **FIELDS SEARCHED** |

Minimum documentation searched (classification system followed by classification symbols)

H04B 7/155(2006.01); H04L 5/00(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 중계기(repeater), 자원(resource), 빔(beam), 충돌(conflict), 우선(priority)

| | |
|---|---|
| **C.** | **DOCUMENTS CONSIDERED TO BE RELEVANT** |

| Category* | Citation of document, with indication, where appropriate, of the relevant passages | Relevant to claim No. |
|---|---|---|
| X<br>Y | VIVO. Discussion on side control information and NCR behavior. R1-2300467, 3GPP TSG RAN WG1 Meeting #112. Athens, Greece. 17 February 2023.<br>See sections 2.1.1-2.1.2. | 1-4,7-8,11-15,17-18<br>5-6,9-10,16,19-20 |
| Y | MEDIATEK INC. Side control information and NCR behavior. R1-2301617, 3GPP TSG RAN WG1 Meeting #112. Athens, Greece. 17 February 2023.<br>See section 2. | 5-6,16 |
| Y | LE ELECTRONICS. Discussion on side control information and NCR behavior. R1- 2301070, 3GPP TSG RAN WG1 Meeting #112. Athens, Greece. 17 February 2023.<br>See section 2.2; and figure 8. | 9-10,19-20 |
| A | ETRI. Discussion on side control information for network-controlled repeater. R1-2301049, 3GPP TSG RAN WG1 Meeting #112. Athens, Greece. 17 February 2023.<br>See section 2.1. | 1-20 |
| A | WO 2021-022136 A1 (QUALCOMM INCORPORATED) 04 February 2021 (2021-02-04)<br>See paragraphs [0188]-[0234]; and figures 5-8. | 1-20 |

☐ Further documents are listed in the continuation of Box C.    ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **22 October 2024** | **22 October 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

International application No.

**PCT/KR2024/010334**

| Patent document cited in search report | | | Publication date (day/month/year) | Patent family member(s) | | | Publication date (day/month/year) |
|---|---|---|---|---|---|---|---|
| WO | 2021-022136 | A1 | 04 February 2021 | BR | 112022000918 | A2 | 08 March 2022 |
| | | | | CN | 114175690 | A | 11 March 2022 |
| | | | | CN | 114175690 | B | 12 September 2023 |
| | | | | EP | 4005322 | A1 | 01 June 2022 |
| | | | | KR | 10-2022-0042121 | A | 04 April 2022 |
| | | | | TW | 202110256 | A | 01 March 2021 |
| | | | | US | 11589369 | B2 | 21 February 2023 |
| | | | | US | 11864224 | B2 | 02 January 2024 |
| | | | | US | 2021-0037549 | A1 | 04 February 2021 |
| | | | | US | 2023-0156777 | A1 | 18 May 2023 |

Form PCT/ISA/210 (patent family annex) (July 2022)